(19) Europäisches Patentamt
European Patent Office
Office européen des brevets

(11) Numéro de publication : **0 119 881**
**B1**

(12) **FASCICULE DE BREVET EUROPÉEN**

(45) Date de publication du fascicule du brevet :
**12.11.86**

(51) Int. Cl.⁴ : **F 01 D 11/08**

(21) Numéro de dépôt : **84400268.3**

(22) Date de dépôt : **09.02.84**

(54) **Anneau d'étanchéité pour un rotor de turbine d'une turbomachine et installation de turbomachine munie de tels anneaux.**

(30) Priorité : **10.02.83 FR 8302101**

(43) Date de publication de la demande :
**26.09.84 Bulletin 84/39**

(45) Mention de la délivrance du brevet :
**12.11.86 Bulletin 86/46**

(84) Etats contractants désignés :
**DE FR GB**

(56) Documents cités :
**BE-A- 677 204**
**CH-A- 332 966**
**FR-A- 1 189 849**
**FR-A- 2 438 165**
**FR-A- 2 444 801**
**FR-A- 2 467 292**
**FR-A- 2 482 662**
**GB-A- 1 082 634**
**GB-A- 2 055 983**
**GB-A- 2 089 439**
**US-A- 3 966 356**
**US-A- 4 087 199**
**US-A- 4 398 866**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Mandet, Gérard Marcel François**
**37, rue du Monceau**
**F-77133 Fericy (FR)**
Inventeur : **Soligny, Marcel Robert**
**136, boulevard Jean Mermoz**
**F-94150 Chevilly-Larue (FR)**

(74) Mandataire : **Moinat, François**
**S.N.E.C.M.A. Service des Brevets Boîte Postale 81**
**F-91003 Evry Cedex (FR)**

## Description

La présente invention concerne une turbomachine comportant un anneau d'étanchéité pour un rotor de turbine ainsi qu'une installation de turbomachine, dont les rotors de la turbine à haute pression sont entourés chacun par un tel anneau.

On sait que les changements de régime des turbomachines, qui sont relativement fréquents lorsqu'il s'agit de moteurs montés sur des véhicules aériens, entraîneraient des variations importantes du jeu entre le rotor de chaque étage de la turbine et l'anneau, généralement métallique, qui l'entoure, si des dispositions spéciales n'étaient pas prises pour maintenir ce jeu entre des limites prédéterminées, et éviter en particulier qu'il s'annule ou même devienne négatif, ce qui pourrait provoquer l'endommagement des aubes du rotor. Il est connu en particulier de régler en fonctionnement le jeu entre les aubes du rotor de chaque étage d'une turbine et l'anneau métallique qui l'entoure, grâce à une ventilation sélective du carter de la turbine, des aubes et du disque du rotor, ainsi que de l'anneau de chaque étage. L'air de ventilation utilisé à cet effet est généralement prélevé sur le compresseur associé à la turbine, dont un pourcentage non négligeable de la puissance est ainsi utilisé pour assurer ce réglage du jeu.

Le brevet FR-A-2 371 575 décrit une structure de virole de turbine à gaz, comprenant un écran thermique annulaire, formé essentiellement par des segments en matériau céramique, dont les bords amont et aval présentent des gorges, et un anneau métallique à section évidée, monté à l'intérieur du carter de la turbine, et portant des organes radiaux de support, adaptés pour s'engager dans les gorges des segments en céramique. Comme indiqué à la page 7 de ce document, l'évidement intérieur de l'anneau métallique peut être utilisé comme une chambre d'équilibre, d'où partent une série de trous permettant une circulation d'air derrière les segments en céramique, jusqu'à des cavités aménagées respectivement près de leurs bords amont et aval, ladite chambre d'équilibrage pouvant être en communication fluidique avec un fluide de refroidissement, tel que de l'air prélevé du compresseur ; un autre trou permet à l'air de refroidissement provenant de la chambre d'équilibrage de purger et de refroidir la face arrière des segments en céramique.

Dans cette réalisation antérieure, les segments en céramique forment donc un écran thermique annulaire, interposé entre l'enceinte balayée par les aubes de turbines où circulent les gaz très chauds, d'une part, et, d'autre part, l'anneau métallique qui supporte lesdits segments en céramique. Cet écran thermique en matériau céramique offre différents avantages : sa bonne résistance aux températures élevées permet notamment, sinon de supprimer complètement tout refroidissement de la face externe dudit écran thermique, tout au moins de n'y consacrer qu'un faible débit d'air de ventilation, prélevé sur le compresseur. En contrepartie, les coefficients respectifs de dilatation thermique du matériau en céramique constituant l'écran thermique et du métal constituant l'anneau à section évidée sont si différents que des dispositions particulières doivent être prises pour éviter que les différences de dilatation thermique ne se traduisent par l'apparition, dans les segments en matériau céramique, de contraintes importantes, éventuellement susceptibles d'en réduire la durée de vie ou d'en produire la rupture. Par ailleurs, les segments en céramique doivent être assujettis intérieurement à l'anneau métallique de manière à assurer l'étanchéité de l'anneau composite ainsi formé, de façon à éviter notamment que ledit anneau métallique ne soit balayé sur toutes ses surfaces par les gaz très chauds qui traversent l'enceinte de turbine. Selon le brevet FR-A-2 371 575, précédemment mentionné, ce problème d'étanchéité est résolu en conférant une seconde fonction, d'étanchéification, aux organes de support des segments en céramique ; comme cependant ces organes de support, également métalliques, sont en contact thermique direct avec l'anneau métallique, dont ils font d'ailleurs partie intégrante, il est prévu, selon cette demande de brevet français, de donner une forme dentelée aux surfaces desdits organes de support qui sont en contact direct avec certaines parties des segments en céramique, ceci afin de réduire les surfaces de contact, et par suite la transmission de chaleur à l'anneau métallique. Il en résulte, cependant, non seulement des risques d'endommagement des dents ainsi formées dans les organes de support, et d'effritement du matériau céramique avec lequel elles sont en contact très localisé, mais aussi une réduction importante de l'étanchéité desdites surfaces en contact. D'autre part, la différence importante entre les coefficients de dilatation respectifs de l'anneau métallique et des segments en céramique peut donner lieu à des mouvements relatifs de ces différentes pièces, qui sont susceptibles de modifier les conditions de contact entre leurs surfaces correspondantes, et par suite l'étanchéité assurée au niveau de ces surfaces de contact.

La turbomachine comportant un anneau d'étanchéité pour un rotor de turbine selon la présente invention comprend également un écran thermique annulaire, formé essentiellement par des segments en matériau céramique, dont les bords amont et aval présentent des gorges semi-annulaires et dont les faces internes portent un matériau abradable, un anneau métallique à section évidée, monté à l'intérieur du carter de la turbine, et portant des organes radiaux de support, adaptés pour s'engager dans les gorges des segments en céramique, et des moyens pour envoyer de l'air dans l'évidement intérieur de l'anneau métallique, et vers les faces externes des segments en céramique. L'anneau de rotor de la turbomachine selon la présente invention n'offre cependant aucun des inconvénients des anneaux de rotor décrits dans la demande de brevet français précédemment mentionnée ; il est caractérisé en ce que l'anneau métallique coopère avec des moyens de montage à l'intérieur du carter de façon à pouvoir se dilater librement dans l'une au moins des directions radiale, longitudinale et périphérique, ces moyens de montage comprenant deux faces radiales sensiblement planes de l'anneau métallique qui coopèrent avec deux brides radiales également planes, qui sont solidaires intérieurement du carter, les organes radiaux de support prolongeant radialement vers l'axe de la turbine lesdites faces radiales dudit anneau métallique sous la forme de deux collerettes annulaires engagées dans lesdites gorges des segments et ayant en outre sur leurs faces latérales externes des gorges, et que des joints appropriés sont interposés entre certains éléments de l'anneau et des pièces correspondantes, solidaires du carter, de façon à assurer l'étanchéité de l'anneau malgré les dilatations/contractions d'origine thermique, lesdits joints d'étanchéité étant logés dans lesdites gorges aménagées sur les faces externes des organes radiaux de support.

L'anneau pour un rotor de turbine d'une turbomachine selon la présente invention se distingue donc essentiellement de l'anneau antérieurement connu en ce qu'il comporte des joints d'étanchéité qui sont indépendants des organes radiaux de support des segments en céramique, ce qui présente différents avantages : d'une part, ces joints d'étanchéité peuvent assurer leur fonction propre quels que soient les mouvements relatifs éventuels — de faibles amplitudes — des différents éléments de l'anneau, dus notamment à la différence entre leurs coefficients respectifs de dilatation ; par ailleurs, les joints d'étanchéité peuvent être remplacés par des joints neufs de façon à rénover l'étanchéité de l'anneau sans qu'il soit nécessaire de changer d'autres éléments, plus importants et plus coûteux, dudit anneau, comme c'est le cas avec la réalisation antérieure, où l'usure des éléments en contact de l'anneau métallique, des organes de support et des segments en céramique ne peut être compensée, lorsqu'elle perturbe l'étanchéité globale de l'anneau, qu'en échangeant les éléments correspondants les plus usés. En particulier, les surfaces de contact entre les segments en céramique et les parties métalliques de l'anneau peuvent être relativement grandes, et ne comporter aucune zone, notamment aucune dent, si étroite que son contact avec le matériau en céramique peut entraîner une usure rapide de ladite partie métallique et/ou un effritement de la partie correspondante du segment en céramique. Ceci évite notamment des décalages radiaux éventuels entre segments en céramique voisins, susceptibles de perturber le bon fonctionnement de l'étage correspondant de la turbine à gaz.

La disposition des joints d'étanchéité est particulièrement avantageuse, dans la mesure où les mouvements relatifs — de faibles amplitudes —, de l'anneau métallique et des segments en céramique, qui sont dus, comme on l'a déjà mentionné à plusieurs reprises, à l'importante différence entre les coefficients de dilatation des matériaux constitutifs correspondants, peuvent avoir lieu sans que chaque joint d'étanchéité cesse d'être serré entre la partie correspondante de l'anneau métallique et la surface plane, correspondante, de l'une des deux brides radiales.

Selon une autre caractéristique de cette première forme de réalisation de l'invention, les segments en céramique ont leurs bords longitudinaux voisins assemblés par tenon et mortaise avec un jeu autorisant les déplacements desdits segments dus à leur dilatation et à celle de l'anneau métallique dans la direction périphérique. Ce mode d'assemblage des différents segments en céramique qui constituent l'écran thermique, est particulièrement avantageux dans la mesure où il rend les dilatations respectives de l'anneau métallique et de l'anneau formé par les segments en céramique, indépendantes les unes des autres.

Selon une autre caractéristique avantageuse de cette première forme de réalisation de l'invention, au moins un organe élastiquement déformable peut être interposé entre chaque segment en céramique et la partie correspondante de l'anneau métallique, sous la forme d'au moins une lame de ressort, qui est disposée longitudinalement, et dont la partie médiane est assujettie à la paroi interne de l'anneau métallique, tandis que ses extrémités coopèrent respectivement avec les parties amont et aval du segment en céramique, lesquelles peuvent être munies à cet effet de rainures longitudinales pour positionner lesdites extrémités de la lame de ressort. Ce montage élastique des différents segments constituant l'écran thermique par rapport à l'anneau métallique est particulièrement avantageux puisque, en cas d'annulation du jeu entre les aubes du rotor et les faces internes des segments en céramique, ces derniers peuvent s'effacer dans la direction axifuge grâce à la déformation des organes élastiquement déformables correspondants, notamment des lames de ressort correspondantes, ce qui réduit considérablement les risques d'endommagement ou de rupture des segments en céramique.

Dans une seconde forme de réalisation avantageuse de l'invention, la turbomachine comportant un anneau d'étanchéité du genre précité est caractérisée en ce que l'anneau métallique comporte deux brides radiales fixées intérieurement au carter et prolongées en direction de l'axe de la turbine par des parties radiales qui portent des brides longitudinales qui sont engagées dans les gorges des segments et qui sont adaptées pour retenir, dans lesdites gorges, des joints d'étanchéité en forme de tores creux fendus.

Selon une autre caractéristique de cette forme de réalisation, particulièrement simple, de l'invention, les deux brides radiales présentent, sur leurs faces respectives tournées l'une vers l'autre, deux séries de languettes, élastiques, qui sont interposées les unes entre les autres et disposées de façon à exercer, sur la face externe de chaque segment en céramique, une poussée, qui l'applique, élastiquement, sur les organes radiaux du support. Ce montage élastique, particulièrement simple, des anneaux en céramique sur l'anneau métallique offre les nombreux avantages qui ont déjà été indiqués précédemment à propos de la première forme de réalisation de l'invention.

Selon une autre caractéristique avantageuse de cette seconde forme de réalisation, les bords longitudinaux voisins des segments en céramique sont conformés, au voisinage des faces internes desdits segments, de manière que leurs bords longitudinaux se recouvrent avec emboîtement à la façon de tuiles. Avec cette disposition également, les dilatations thermiques respectives de l'anneau métallique d'une part, et de l'anneau formé par les segments en céramique, d'autre part, sont pratiquement indépendantes les unes des autres.

La présente invention concerne également une installation de turbomachine, dont les rotors de la turbine à haute pression sont entourés chacun par un anneau fixe présentant l'une au moins des caractéristiques précédemment indiquées. L'installation de turbomachine selon la présente invention est caractérisée en ce qu'au moins une première conduite amène, dans l'évidement intérieur de l'anneau métallique associé à chaque étage de la turbine à haute pression, de l'air de ventilation, prélevé, sous une première pression déterminée, dans l'enceinte entourant le ou les tubes à flamme de la chambre de combustion de la turbomachine et/ou d'un étage convenablement choisi du ou des compresseurs. Cette disposition est particulièrement avantageuse dans la mesure où elle permet la ventilation interne de l'anneau métallique en utilisant un courant d'air à température bien déterminée, dans la mesure où cet air de ventilation a été prélevé soit en un point unique de l'installation, soit en deux points distincts de celle-ci, les deux courants d'air prélévés pouvant alors être mélangés dans une proportion variable avant d'être envoyés dans la ou lesdites premières conduites.

Selon une autre caractéristique avantageuse de l'installation suivant la présente invention, des secondes conduites, traversant radialement les anneaux métalliques associés aux différents étages de la turbine à haute pression, dirigent de l'air de pressurisation ; sous une seconde pression déterminée, notablement supérieure à celle régnant dans l'étage correspondant de la turbine, vers les faces externes des différents segments en céramique, et notamment vers des cavités aménagées dans leurs faces externes respectives et vers les surfaces d'appui de chaque segment avec les segments voisins et avec les organes radiaux de support amont et aval. Cette disposition est particulièrement avantageuse dans la mesure où elle permet d'éviter qu'une fraction des gaz très chauds, circulant dans l'étage correspondant de la turbine, ne vienne en contact direct avec les parties des segments en céramique et de l'anneau métallique, qui sont voisines les unes des autres, malgré la présence des joints d'étanchéité. En cas, notamment, d'usure locale des joints d'étanchéité ce dispositif provoquera une fuite d'air de pressurisation, en sens contraire, c'est-à-dire depuis les cavités aménagées éventuellement sur les faces externes des segments en céramique vers l'enceinte de turbine.

A titre d'exemples, on a décrit ci-dessous et illustré schématiquement aux dessins annexés plusieurs formes de réalisation de l'invention.

La figure 1 est une vue partielle, en coupe par un plan axial, d'un étage d'une turbine, aménagé selon une première variante d'une première forme de réalisation de l'invention, cette figure montrant également, en partie, le distributeur de cet étage et celui de l'étage suivant.

la figure 2 est une vue partielle en coupe suivant la ligne II-II de la figure 1.

La figure 3 est une vue partielle, en coupe axiale, analogue à la figure 1, de deux étages successifs, aménagés selon une seconde variante de la première forme de réalisation de l'invention, de la turbine à haute pression d'une installation de turbomachine selon la présente invention.

Les figures 4 et 5 sont des vues partielles en coupe respectivement suivant les lignes IV-IV de la figure 6 et V-V de la figure 3.

La figure 6 est une vue en coupe suivant la ligne VI-VI de la figure 4.

La figure 7 est un schéma illustrant une installation de turbomachine selon la présente invention et son système de distribution d'air de ventilation aux anneaux de deux étages de sa turbine à haute pression.

Les figures 8 et 9 sont des vues partielles, en coupe axiale, analogues à la figure 3, illustrant respectivement deux formes de réalisation différentes du circuit de l'air de pressurisation des anneaux des deux étages de la turbine à haute pression d'une installation selon la première forme de réalisation de la présente invention.

La figure 10 est une vue partielle, en coupe axiale, analogue à la figure 1, montrant un anneau de rotor de turbine, aménagé selon une seconde forme de réalisation de l'invention.

Les figures 11 et 12 sont des vues en coupe suivant les lignes XI-XI et XII-XII de la figure 10.

La figure 13 est une vue en perspective de l'un des segments en céramique de l'anneau illustré partiellement sur la figure 10.

La figure 14 illustre une variante de la seconde forme de réalisation illustrée sur la figure 10.

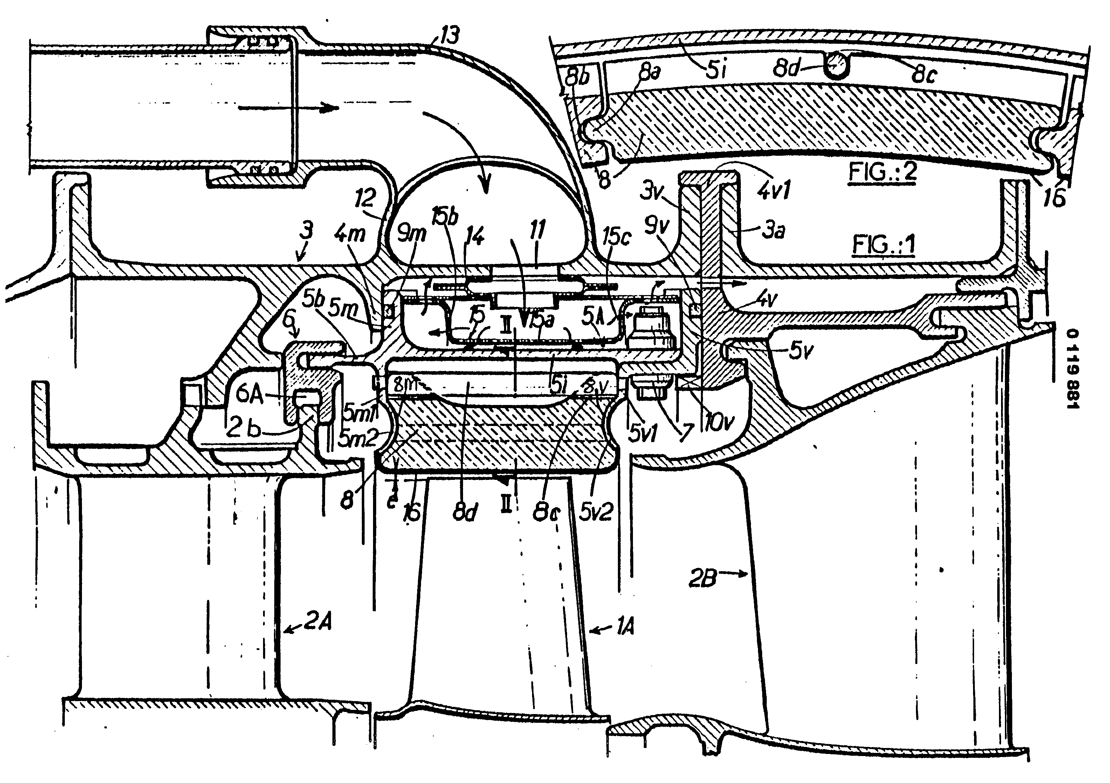

Sur la vue en coupe axiale de la figure 1, 1A désigne le rotor d'un étage de turbine d'une turbomachine, et 2A le distributeur qui le précède. Le rotor 1A est entouré, avec un certain jeu e, par un anneau, qui est fixé au carter 3 de la turbine, et qui est constitué, selon la présente invention, de la façon suivante : cet anneau est monté entre les surfaces annulaires, sensiblement planes, de deux brides radiales, notamment une bride amont, 4m, qui est solidaire de la face interne du carter 3, et, d'autre part, une bride aval, 4v, qui, dans cette forme de réalisation, présente, à l'extérieur du carter 3, un prolongement·à section transversale en T, 4v1, lequel est immobilisé, par exemple par des boulons non représentés, entre, d'une part, une bride radiale externe, 3v, solidaire de l'élément du carter 3 associé au rotor 1A de la turbine et à son distributeur 2A et, d'autre part, une bride radiale externe, 3a, solidaire de l'élément du carter 3 associé au distributeur 2B de l'étage immédiatement suivant de la turbine (qui n'a pas été représenté de façon complète). Un anneau métallique 5A, à section intérieure évidée, est formé essentiellement par une paroi annulaire interne, 5i, solidaire d'une paroi radiale amont, 5m, l'une et l'autre étant supportées par une bride longitudinale, 5b, engagée dans une première gorge annulaire, longitudinale, d'une pièce de raccordement 6, dont une gorge annulaire radiale 6A est elle-même engagée sur une bride annulaire radiale 2b externe, du distributeur 2A. La paroi radiale aval, 5v, de l'anneau métallique 5A est formée par la bride radiale d'une couronne à section transversale en L, dont la bride longitudinale est assujettie à l'extrémité de la paroi interne 5i de l'anneau 5A, par une rangée de boulons tels que 7. L'ensemble est disposé de manière que les faces radiales de l'anneau métallique 5A, c'est-à-dire les faces de ses parois radiales 5v et 5m qui sont tournées vers les faces planes des brides 4v et 4m, sont également planes et en contact glissant avec ces dernières. Deux joints d'étanchéité annulaires, par exemple en amiante graphité, 9v et 9m, sont disposés dans des rainures annulaires des parois latérales, 5v et 5m, de l'anneau 5A, de manière à assurer l'étanchéité au niveau des surfaces en contact glissant, malgré les petits déplacements relatifs dus notamment aux dilatations thermiques.

D'autre part, les parois radiales, 5v et 5m, de l'anneau métallique 5A sont prolongées vers le bas par des organes radiaux qui, dans l'exemple illustré sur la figure 1, comprennent deux collerettes radiales internes 5v1 et 5m1, prolongées elles-mêmes, en direction de l'axe de la turbine, par des éléments à section transversale en segment d'anneau, 5v2 et 5m2, dont la convexité est tournée vers le plan médian radial de l'anneau, disposés symétriquement l'un de l'autre par rapport à un plan perpendiculaire à l'axe de la turbine. Des secteurs d'anneau, 8, en un matériau céramique approprié, sont assemblés comme illustré sur la figure 2 pour former un écran thermique annulaire entre l'anneau métallique 5A et le rotor 1A. Les bords amont et aval de chacun des segments en céramique 8 sont pourvus respectivement de gorges concaves 8m et 8v, à section transversale en arc de cercle, pour l'engagement des parties 5m2 et 5v2, respectivement, des organes de support amont et aval. Comme visible sur la figure 2, l'un des bords longitudinaux de chaque segment 8 forme une sorte de tenon 8a qui est engagé avec un jeu approprié dans une sorte de mortaise, 8b, aménagée dans le bord longitudinal correspondant du segment 8 voisin. D'autre part, la face externe de chaque segment en céramique présente, vers son milieu, une rainure longitudinale, 8c, dans laquelle est engagée, pratiquement sans jeu dans le sens périphérique, une broche ou une entretoise 8d, dont les deux extrémités sont assujetties, par tous moyens appropriés, respectivement aux parties 5v1 et 5m1 des organes radiaux de support. Dans l'exemple illustré, les deux extrémités de chaque broche 8d présentent une section réduite, qui est engagée, respectivement à l'amont et à l'aval, dans un trou correspondant de la partie 5m1 et 5v1 — ce dernier engagement ayant lieu avant le boulonnage de la couronne 5v sur la paroi interne 5i —. On comprend que chaque segment en céramique est assujetti à l'anneau 5A par la broche 8d indépendamment des dilatations thermiques, éventuellement différentes, des composants 5A et 8 ; comme les dilatations ou les contractions d'origine thermique de l'anneau 5A, et par suite aussi les intervalles entre les broches métalliques 8d, qui en sont solidaires, sont généralement supérieures aux dilatations ou aux contractions correspondantes des différents segments en céramique, ces différences de dilatation peuvent être compensées par des modifications du jeu périphérique du tenon 8a de chaque segment 8 dans la mortaise 8b du segment voisin.

Les parties 5v2 et 5m2 des organes radiaux de support des segments 8, qui sont soit en forme de gouttières annulaires, soit en forme de languettes séparées les unes des autres, peuvent être réalisées assez minces pour présenter une élasticité suffisante pour compenser les différences de dilatations radiales des éléments métalliques d'une part, et des anneaux en céramique d'autre part.

Selon une autre caractéristique de l'invention, l'une au moins des faces radiales de l'anneau métallique 5A, notamment la face de sa paroi radiale 5v tournée vers l'aval, ainsi que la surface correspondante de la bride radiale 4v, sont pourvues de moyens pour immobiliser l'anneau métallique 5A par rapport aux brides radiales 4v et 4m, dans la direction périphérique ; dans la forme de réalisation illustrée sur la figure 1, il s'agit de crans 10v, qui sont aménagés respectivement sur les faces coopérantes mentionnées, de manière à s'interpénétrer, de préférence avec des jeux autorisant la libre dilatation de l'anneau métallique 5A dans l'une au moins des directions périphérique et radiale ; les crans mentionnés pourraient être remplacés par des saillies et/ou des évidements, de même fonction.

Il résulte de la description précédente que la face externe de l'anneau métallique 5A, à section évidée, est ouverte en regard d'une rangée d'orifices 11, aménagés dans l'élément correspondant du carter 3 de la turbine de façon à déboucher dans un collecteur annulaire 12, aménagé lui-même sur la face externe dudit élément du carter 3. Dans ce collecteur annulaire 12 débouche au moins une conduite 13, qui amène dans ledit collecteur 12, de l'air de ventilation sous une pression appropriée, dont l'origine sera précisée ultérieurement. Une conduite souple 14, qui, dans l'exemple de réalisation illustré, est formée par un soufflet, raccorde chaque ouverture 11 avec l'inté-rieur d'un distributeur d'air 15, en forme d'anneau à section évidée ; dans l'exemple illustré, ce distributeur 15 comprend notamment une tôle perforée à section transversale en U, dont la partie 15a s'étend parallèlement et à faible distance de la paroi interne 5i de l'anneau métallique 5A, tandis que ses parties 15b et 15c sont sensiblement parallèles aux faces internes des parois radiales 5m et 5v de l'anneau 5A. On comprend que l'air amené sous pression dans le collecteur annulaire 12 circule, comme indiqué par les flèches, et pénètre, par les ouvertures 11 et les conduites souples 14, dans le distributeur 15, d'où l'air sous pression vient frapper les faces internes des parois 5i, 5m et 5v de l'anneau métallique 5A, de façon à les conditionner en température, c'est-à-dire à les refroidir ou à les réchauffer suivant la température de l'air de ventilation envoyé dans la conduite 13. Cet air s'échappe vers l'aval, par des trous percés dans la paroi 4v, dans une enceinte annulaire, d'où il sort par une canalisation non représentée, par exemple vers le cône d'éjection de la turbomachine ; on décrira ultérieurement un système de régulation de la distribution de cet air de ventilation, approprié pour réguler le jeu e entre le rotor 1A et l'anneau correspondant de la turbine.

Selon une autre caractéristique avantageuse de l'invention, la face intérieure de chaque segment en céramique 8 peut porter une couche 16 d'un matériau abradable d'un type connu, qui peut avoir été déposée avec un pistolet à flamme plasma, avec une spatule, ou bien par brasage.

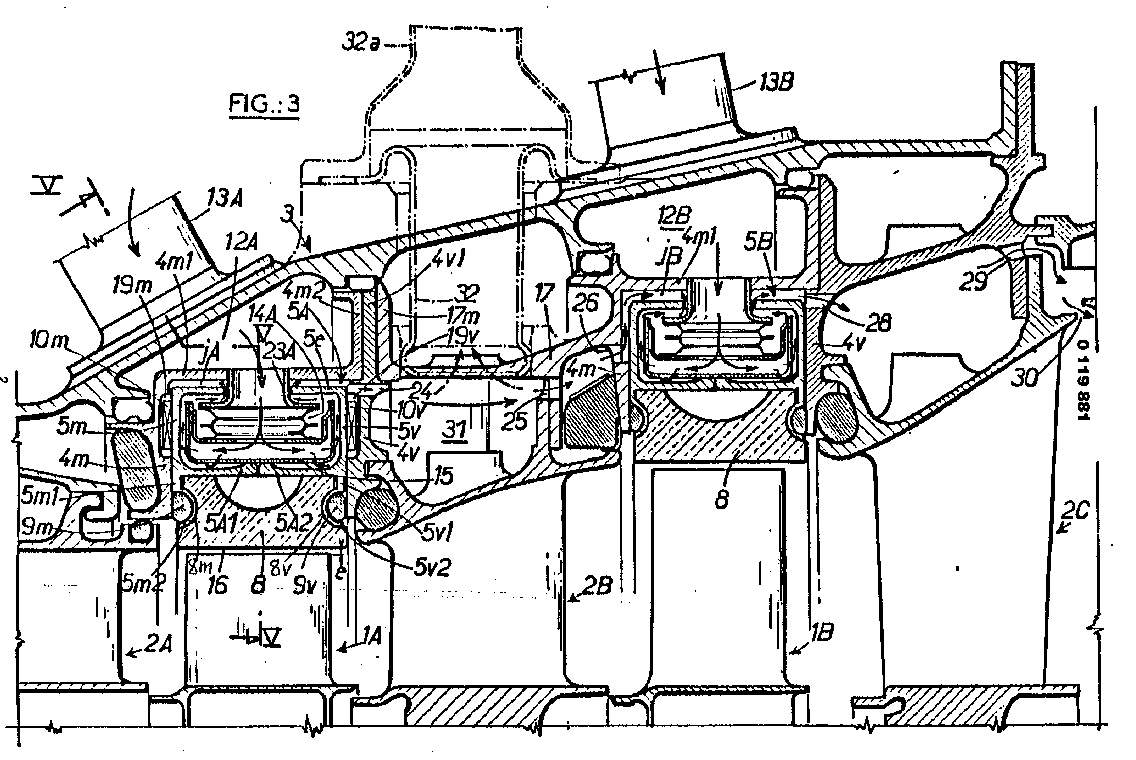

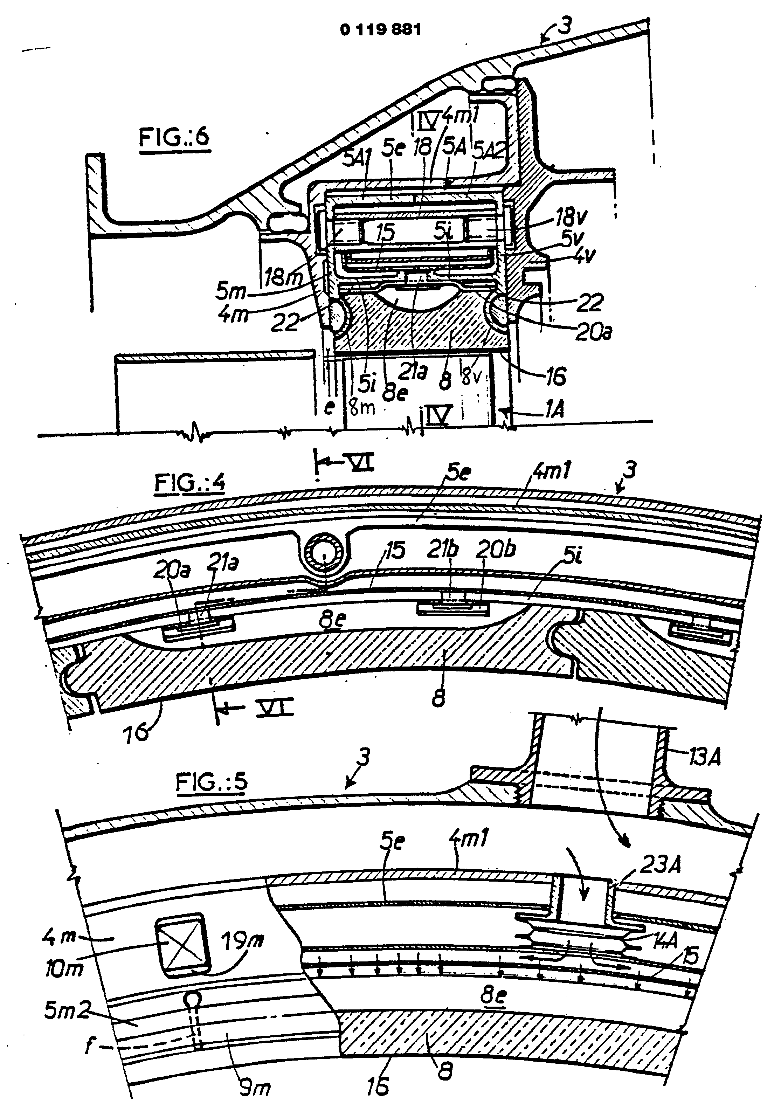

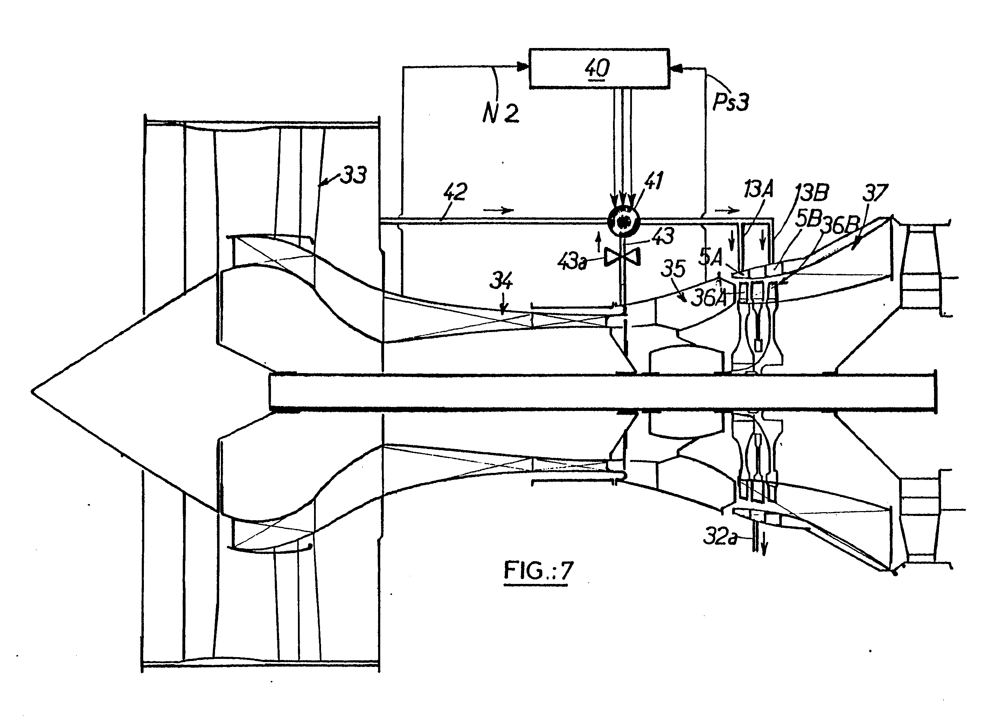

La variante illustrée sur les figures 3 à 6, sur lesquelles on a désigné par les mêmes références les composants homologues de ceux de la forme de réalisation illustrée sur les figures 1 et 2, ne diffère de celle-ci que par les points suivants : la figure 3 représente seulement, en partie, les deux étages de la turbine à haute pression d'une installation de turbomachine selon la présente invention ; on a désigné par 1A et 1B les rotors de ces deux étages, par 2A et 2B, les distributeurs correspondants, et par 5A et 5B les anneaux fixes, réalisés selon la présente invention, qui entourent respectivement les rotors 1A et 1B. Les deux brides annulaires, 4v et 4m, qui coopèrent avec les faces radiales de chaque anneau métallique, par exemple 5A, sont réunies par un anneau cylindrique 4m1, qui entoure coaxialement, avec un certain jeu radial, jA, la paroi externe 5e de l'anneau métallique correspondant, 5A. L'anneau métallique 4m1 est solidaire, par son bord amont, de la bride radiale 4m, et, par son bord aval, d'une autre bride radiale, 4m2, qu'une rangée de boulons (non visibles sur la figure 3) réunit au prolongement externe, 4v1, de la bride radiale 4v ; en outre, dans le cas du premier étage, c'est-à-dire de l'anneau métalique 5A, la même rangée de boulons sert à fixer l'ensemble des deux brides par sa bride radiale 4m et par son extension radiale 4v1 à une bride radiale, 17m, d'une virole cylindrique 17, qui supporte le distributeur 2B du second étage. De nombreux joints annulaires, qu'il n'est pas nécessaire de décrire en détail, assurent l'étanchéité des brides radiales 4m et 4v par rapport aux éléments voisins des distributeurs 2A et 2B respectivement. Les deux brides radiales, 4m et 4v, réunies par l'anneau cylindrique 4m1, forment donc une sorte de gouttière, qui est ouverte radialement vers l'intérieur de l'étage correspondant de la turbine, et dans laquelle l'anneau composite, formé par l'anneau métallique 5A et par les segments en céramique tels que 8, est monté de la façon précédemment décrite, aux différences près suivantes : l'anneau métallique 5A est formé lui-même dans l'exemple représenté par deux demi-coquilles annulaires, à section en U, 5A1 et 5A2, qui sont assemblées dans le plan radial médian de l'anneau 5A, par des broches ou des entretoises longitudinales, telles que 18 selon la figure 6 ; on voit sur cette dernière que les extrémités de l'entretoise tubulaire 18, dont la longueur correspond sensiblement à la dimension transversale de l'évidement intérieur de l'anneau 5A, sont taraudées intérieurement, pour permettre d'y visser extérieurement des vis 18m et 18v, dont le serrage assure l'immobilisation des deux demi-coquilles 5A1 et 5A2. Les broches ou entretoises 18 sont réparties de préférence régulièrement le long de chaque anneau métallique tel que 5A. D'autre part, les différents segments en céramique tels que 8, dont les bords amont et aval sont conformés comme on l'a décrit précédemment à l'aide de la figure 1, sont supportés respectivement par engagement, dans les gorges correspondantes 8m et 8v de leurs bords amont et aval, des organes radiaux de support, 5m1-5m2 et 5v1-5v2 respectivement, qui prolongent vers l'intérieur de la turbine les parois radiales des demi-coquilles 5A1 et 5A2. Par ailleurs, comme visible sur la figure 5, ces organes radiaux de support forment deux collerettes annulaires, dont chacune présente des fentes radiales f, évitant l'apparition de contraintes importantes dans la collerette correspondante, par exemple 5m2, qui seraient dues, en l'absence de ces fentes radiales f, à la différence entre les températures respectives des bords interne et externe de ladite collerette. Par ailleurs, les joints d'étanchéité 9m et 9v sont logés dans des gorges externes aménagées sur les faces externes des organes radiaux de support, c'est-à-dire notamment dans les concavités des collerettes 5m2 et 5v2, qui sont engagées, à la façon de pinces élastiques, dans les gorges correspondantes 8m et 8v des bords amont et aval des différents segments en céramique ; les joints 9m et 9v coopèrent également avec les parties les plus internes des faces radiales, tournées l'une vers l'autre, des deux brides radiales 4m et 4v, de façon à assurer l'étanchéité de l'anneau composite, tout en autorisant des déplacements relatifs de faible amplitude entre ledit anneau composite et lesdites brides radiales, dans l'une au moins des directions radiale et périphérique. Comme dans la forme de réalisation illustrée sur les figures 1 et 2, ces déplacements sont limités, ici par des crans à flancs parallèles, 10m et 10v (voir aussi la figure 5), dont chacun est engagé à l'intérieur d'un embrèvement, 19m ou 19v, aménagé dans la face correspondante de la bride radiale 4m ou 4v ; la figure 5 montre clairement que, dans cette forme de réalisation, la coopération du cran 10m, avec l'embrèvement correspondant, 19m, autorise des déplacements radiaux limités de l'anneau composite 5A-8 par rapport à la bride radiale 4m et il en est de même pour le cran 10v avec l'embrèvement 19v.

D'autre part, dans cette forme de réalisation, deux organes élastiquement déformables, notamment deux lames de ressort, 20a et 20b (figure 4), sont interposés entre chaque segment en céramique tel que 8 et la partie correspondante de l'anneau métallique ; dans la forme de réalisation illustrée, les deux lames de ressort 20a et 20b sont disposées longitudinalement, comme visible sur la figure 6 ; chacune a sa partie médiane assujettie à la paroi interne, 5i, de l'anneau métallique, notamment par un axe, 21a et 21b, qui est encastré dans un trou aménagé dans les bords voisins des éléments inférieurs des deux demi-coquilles annulaires 5A1 et 5A2. Par ailleurs, les extrémités de chacune des lames de ressort 20a et 20b coopèrent respectivement avec les parties amont et aval du segment en céramique, 8, correspondant ; dans l'exemple de réalisation illustré, cette coopération a lieu par engagement des extrémités correspondantes de la lame de ressort, par exemple 20a (figure 6), dans des rainures longitudinales, qui sont aménagées dans la face externe du segment en céramique 8, et qui ont été désignées par 22 sur la figure 6. On comprend que, si pour une raison quelconque, le jeu, e, entre la couche 16 de matériau abradable, déposée sur la face interne de chacun des segments tels que 8, d'une part, et les extrémités des aubes du rotor correspondant, d'autre part, s'annule, les composantes radiales des impulsions que lesdites aubes appliquent à l'anneau formé par les segments 8, ont pour effet de faire fléchir les lames de ressort telles que 20a et 20b.

Comme visible sur la figure 3, la pièce 4m-4m1-4m2 associée à l'anneau métallique, par exemple 5A, de chaque étage de la turbine à haute pression, délimite, avec la partie correspondante du carter 3 de la turbine, un collecteur annulaire 12A ou 12B, qui est alimenté en air de ventilation par au moins une conduite sensiblement radiale, 13A ou 13B. A l'intérieur de chaque anneau métallique à section évidée, par exemple 5A, est disposé un distributeur annulaire 15, qui est constitué essentiellement par une tôle perforée à section transversale en U, à laquelle est fixée, vers l'extérieur, une tôle pleine, qu'une conduite souple, notamment un soufflet métallique tel que 14A, relie à une conduite rigide 23A ; la partie cylindrique, la plus extérieure, de la conduite rigide 23A traverse la paroi supérieure 5e de l'anneau métallique 5A par une ouverture de diamètre un peu supérieure au diamètre externe de ladite conduite rigide 23A, et celle-ci débouche dans le collecteur annulaire 12A à travers la paroi 4m1 dans laquelle ladite conduite est emboîtée d'une façon étanche par un moyen connu en soi. L'air de ventilation est donc amené dans le distributeur 15 et circule, comme indiqué par les flèches, en passant par les différentes conduites rigides telles que 23A et les conduites à soufflet 14A qui leur sont raccordées, et il est ensuite projeté à travers la tôle perforée 15 du distributeur contre les faces internes des parois latérales et de la paroi intérieure de l'anneau métallique 5A. L'air de ventilation, ayant ainsi accompli sa fonction de conditionnement thermique des parois de l'anneau métallique 5A, s'en échappe ensuite par le jeu existant, comme indiqué plus haut, entre les parois externes des différentes conduites rigides telles que 23A et les trous correspondants de la paroi supérieure 5e de l'anneau métallique 5A ; il parvient ainsi dans la chambre annulaire étroite jA, d'où il s'échappe vers le second étage de la turbine, en empruntant des orifices 24, 25 et 26, le premier étant aménagé dans le prolongement externe, 4v1, de la bride radiale 4v, et les deux autres, dans des éléments du support du distributeur, 2B, du second étage de la turbine. L'air de ventilation en provenance du premier étage parvient ainsi dans la chambre annulaire étroite, jB, du second étage, où il se mélange avec l'air de ventilation sortant de l'anneau métallique correspondant, 5B ; ce mélange d'air de ventilation s'échappe de la chambre annulaire jB, par un orifice 28, il traverse ensuite un orifice 29 aménagé dans le support du distributeur 2C, du premier étage de la turbine à basse pression (non représentée en détail), et il est enfin évacué dans l'enceinte de chambre dudit premier étage de la turbine à basse pression par un orifice 30.

Dans une variante, illustrée en pointillé sur la figure 3, les orifices 28, 29 et 30 sont supprimés, et l'air de ventilation sortant de l'anneau métallique 5B du second étage de la turbine à haute pression circule dans la chambre annulaire jB vers l'amont, c'est-à-dire en sens contraire de la circulation précédemment décrite pour l'anneau de turbine du deuxième étage 1B ; par l'orifice 25 l'air de ventilation provenant de l'anneau 5B parvient ensuite dans une chambre étanche 31, qui est aménagée dans le support du distributeur 2B, et dans laquelle l'air de ventilation en provenance de l'anneau métallique 5A parvient également par l'orifice 24, comme précédemment décrit. Ces deux courants d'air de ventilation pénètrent ensuite dans une conduite radiale 32, qui est prolongée, à l'extérieur du carter 3, par une autre conduite radiale 32a, dont l'autre extrémité (non représentée) aboutit dans le carter d'échappement de la turbomachine (également non représenté).

La figure 7 est le schéma d'une installation de turbomachine selon la présente invention : cette installation comprend par exemple une soufflante 33, un compresseur 34, comprenant N étages, une chambre de combustion 35, une turbine à haute pression, comprenant deux étages, 36A et 36B, comportant chacun un anneau composite selon la présente invention, de l'un des types précédemment décrits, et une turbine à basse pression 37. Dans la forme de réalisation illustrée schématiquement sur la figure 7, on a supposé que la turbomachine comporte, pour assurer sa régulation, un calculateur du type à pleine autorité, représenté par le bloc 40.

Ce calculateur, à partir de signaux émis par divers capteurs déjà présents dans la turbomachine, traite les informations relatives par exemple au régime de turbine, par exemple N2 (vitesse de rotation de la turbine HP), ou relatives aux pressions, par exemple Ps3 (pression règnant dans la chambre de combustion 35) et élabore un signal, lequel est envoyé à un boisseau 41, lequel, en fonction du signal reçu pour mettre en communication les conduites radiales 13A et 13B qui alimentent en air de ventilation les anneaux métalliques évidés 5A et 5B (associés aux deux étages de turbine HP) avec l'une ou l'autre des conduites de prélèvement d'air de ventilation 42 et 43 ou les deux simultanément.

Alors que la conduite 42 prélève l'air dans la veine de la soufflante 33, à une température modérée $T_1$, la conduite 43 dans laquelle est inséré un diaphragme 43A, prélève l'air de ventilation dans un étage proche de la sortie du compresseur HP 34, c'est-à-dire à une température relativement élevée $T_2$.

Le calculateur 40 peut imposer au boisseau 41 toute position intermédiaire permettant de faire varier la proportion des débits d'air respectivement à la température $T_1$ et à la température $T_2$ afin que le mélange alimentant les anneaux 5A-5B prenne une température intermédiaire entre $T_1$ et $T_2$ propre à optimiser le jeu en bout des pales selon les conditions de fonctionnement.

L'air de ventilation qui a servi au conditionnement thermique des deux anneaux 5A et 5B, est ensuite évacué par l'un des deux circuits qui ont été précédemment décrits à l'aide de la figure 3, par exemple, selon la variante figurant en pointillés sur cette figure, vers le carter d'échappement de la turbine, par l'intermédiaire de la conduite radiale 32a. Le jeu (e sur la figure 3) entre les aubes du rotor de chaque étage de la turbine à haute pression et l'anneau fixe qui l'entoure peut donc être régulé automatiquement par le calculateur 40 qui, par la commande du boisseau 41, peut envoyer dans les anneaux mentionnés de l'air de ventilation froid, en provenance de la conduite 42, ou chaud, en provenance de la conduite 43.

Dans une variante, l'air froid de ventilation est prélevé en aval du troisième étage de redresseur du compresseur à haute pression 34 (figure 7), et l'air chaud de ventilation, dans un étage de ce compresseur à haute pression, proche de sa sortie, par exemple dans son dernier étage ; après avoir exercé sa fonction, l'air de ventilation est ensuite évacué vers la turbine à basse pression 37, en empruntant le circuit qui a été précédemment décrit à l'aide de la figure 3, et qui passe notamment par les orifices 28, 29 et 30.

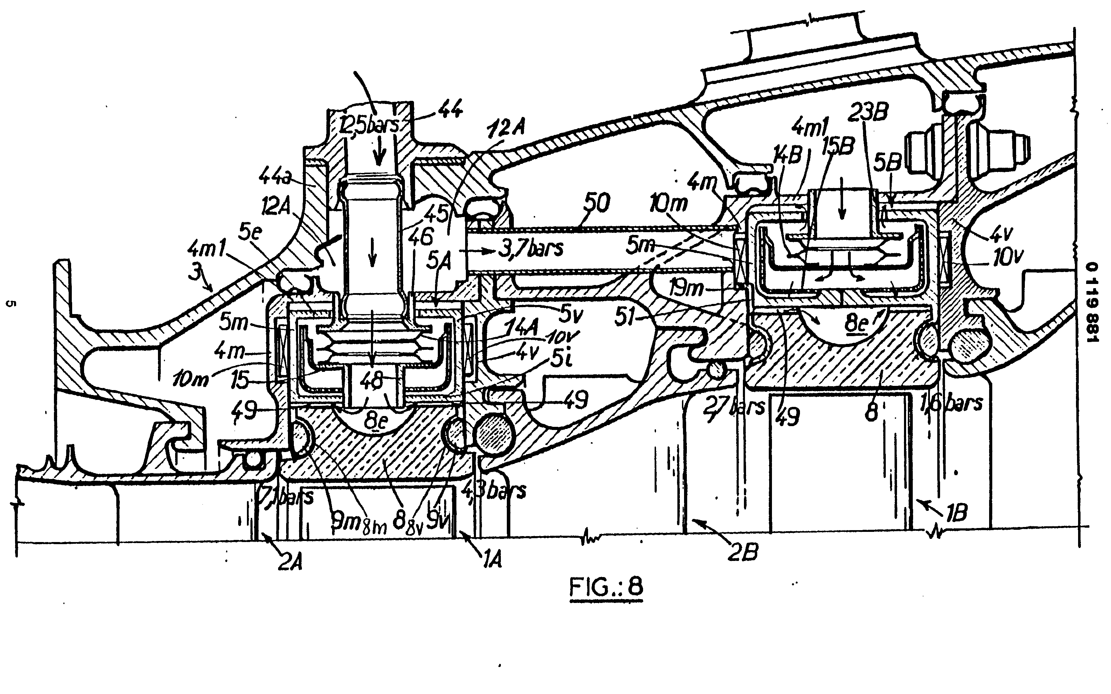

La figure 8 est une vue partielle d'une variante des deux étages de la turbine à haute pression d'une installation de turbomachine selon la présente invention. Au niveau du premier étage, la paroi du carter 3 de la turbine comporte un bossage 44a, sur lequel est montée une conduite radiale 44, alimentée avec de l'air de pressurisation, prélevé dans un étage du compresseur à haute pression, proche de sa sortie ; cet étage est choisi de manière que la pression de l'air de pressurisation soit supérieure à celle règnant dans l'étage correspondant de la turbine ; par exemple, si la pression règnant dans l'enceinte de turbine est de 7,1 bars à l'entrée du premier étage et de 4,3 bars à sa sortie, on peut prélever l'air de pressurisation dans un des derniers étages du compresseur à haute pression, par exemple le treizième, sous une pression voisine de 12,5 bars. La conduite radiale 44 est prolongée vers l'intérieur de la turbine par une conduite 45, qui traverse radialement l'anneau cylindrique 4m1, réunissant les deux brides radiales 4m et 4v, ainsi que la paroi externe 5e de l'anneau métallique 5A ; l'extrémité la plus interne de la conduite 45 est engagée à frottement doux dans une conduite rigide 46, qui est solidaire de l'anneau cylindrique 4m1, de manière que les deux conduites 45 et 46 soient susceptibles de mouvements relatifs, d'amplitude limitée, dans la direction radiale, sans cesser d'être en contact étanche, compte tenu des dilatations, éventuellement différentes, des différents composants décrits.

La conduite 46, qui est solidaire de la bride 4m1, est raccordée par une conduite souple, notamment en forme de soufflet, 14A, à une seconde conduite rigide 48, qui est solidaire de l'anneau métallique 5A, et notamment de sa paroi intérieure, 5i et qui traverse le distributeur annulaire 15, monté dans l'évidement intérieur de l'anneau métallique 5A, ainsi qu'on l'a décrit précédemment, à l'aide de la figure 3. La conduite rigide 48 débouche sur la face externe de l'un des segments en céramique, 8, notamment dans une dépression 8e aménagée sur cette face externe. Dans l'exemple de réalisation considéré, les dépressions 8e des segments en céramique 8 sont en forme d'auges à section en forme de segment circulaire, et s'étendent de l'un à l'autre des deux bords périphériques de l'élément 8, de telle sorte que les dépressions 8e des différents segments 8 communiquent entre elles en formant une rigole annulaire, qui est alimentée en air de pressurisation par au moins une conduite radiale 44-45-46-14A-48, précédemment décrite ou, de préférence, par plusieurs conduites radiales analogues, réparties de préférence régulièrement sur le pourtour de l'anneau métallique 5A. Il convient, à ce propos, de souligner que les plans axiaux des figures 3 et 8 sont différents, les conduites radiales 13A et 44 étant cependant voisines d'un même plan perpendiculaire à l'axe de la turbine, mais situées dans des plans axiaux différents. Des rainures longitudinales 49 sont aménagées dans la face externe de chaque segment en céramique 8 pour permettre à l'air de pressurisation d'accéder aux bords amont et aval du segment correspondant 8 ; par suite, les côtés externes des joints 9m et 9v sont soumis à la pression de l'air de pressurisation, de par exemple 12,5 bars, qui est supérieure à la pression, de 7,1 ou de 4,3 bars, régnant au même niveau dans l'enceinte de turbine, ce qui évite que l'air très chaud circulant dans ladite enceinte contenant les aubes de turbine ne contourne les joints 9m et 9v et ne parvienne ainsi au contact de l'anneau métallique 5A, sur lequel ces gaz très chauds auraient une action thermique opposée à celle de l'air de ventilation, qui a été indiquée précédemment.

Les différents segments 8, supportés par l'anneau métallique 5B du second étage de la turbine à haute pression, présentent également, sur leur face externe, des évidements 8e, formant une rigole annulaire continue, ainsi que tout au moins du côté du premier étage, des rainures longitudinales 49 pour le passage d'air de pressurisation ; cependant, comme les pressions régnant dans l'enceinte de turbine respectivement à l'entrée et à la sortie du second étage sont seulement de 2,7 et de 1,6 bars, il est possible d'utiliser, comme air de pressurisation, une fraction de l'air de ventilation du premier étage, qui, ainsi qu'on l'a décrit à l'aide de la figure 3, parvient dans le collecteur annulaire 12A par la conduite radiale 13A (figure 3), sous une pression par exemple de 3,7 bars. Pour cela, il suffit de prévoir une conduite longitudinale 50, qui raccorde le collecteur annulaire 12A à l'embrèvement 19m aménagé dans la bride annulaire 4m du second étage, un canal supplémentaire 51 étant aménagé dans la paroi radiale correspondante de l'anneau métallique 5B pour faire communiquer cet embrèvement 19m avec la rainure 49.

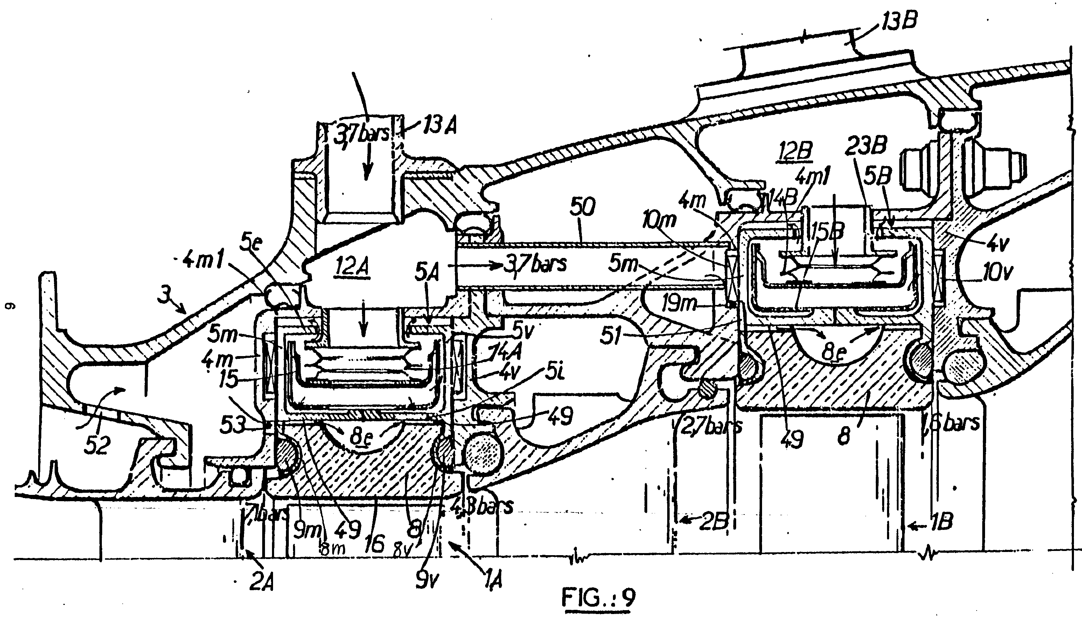

Dans la variante illustrée sur la figure 9, l'air de pressurisation destiné aux segments 8 du premier étage de la turbine à haute pression est prélevé directement dans l'enceinte entourant le ou les tubes à flamme de la chambre de combustion de la turbomachine, en amont dudit premier étage, par un orifice 52, et il parvient, par des orifices 53 aménagés dans la bride radiale amont 4m, du premier étage, dans des fentes longitudinales, 49, aménagées sur la face externe des segments en céramique tels que 8. Quant à l'air de pressurisation du second étage de la turbine à haute pression, il est constitué par une fraction de l'air de ventilation, prélevé dans le collecteur annulaire 12A du premier étage, comme dans le cas illustré sur la figure 8.

D'autres variantes indiquées ci-après peuvent être appliquées aux formes de réalisation de l'invention, qui ont été précédemment décrites à l'aide des figures 1 à 9. L'utilisation d'une fraction de l'air de ventilation pour pressuriser l'anneau du second étage de la turbine à haute pression (figures 8 et 9) est matière à option. Les évidements 8e prévus sur les faces externes des segments en céramique 8 sont facultatifs. La pressurisation de ces évidements, ou, en leur absence, des faces externes des segments en céramique 8 est également facultative. Dans le cas d'une installation de turbomachine ne comportant pas de calculateur « à plein autorité » 40 (figure 7), il est cependant possible de prévoir un circuit connu de régulation du jeu e (figure 1 et 3) en utilisant comme informations d'entrée N2 et Ps3, ou des informations équivalentes. Dans tous les cas, le débit d'air de ventilation dans les premières conduites telles que 13A et 13B peut être contrôlé par un boisseau asservi à un paramètre de fonctionnement, convenablement choisi, de la turbomachine. Les lames de ressort 20a et 20b (figures 4 et 6), qui sont associées à chaque segment en céramique 8 sont en nombre quelconque ; leur forme, leurs modes de fixation à l'anneau métallique et aux segments en céramique correspondants sont également matières à option. Ces lames de ressort pourraient être remplacées par d'autres organes élastiques, tels que des ressorts hélicoïdaux, des tampons en matériau élastique, résistant aux températures élevées, etc. Les segments en céramique peuvent être de deux sortes différentes ; l'une des sortes comportant des tenons à chaque extrémité, l'autre des mortaises. Egalement, la convexité des organes de support et la concavité des segments en céramique peuvent évidemment être permutées.

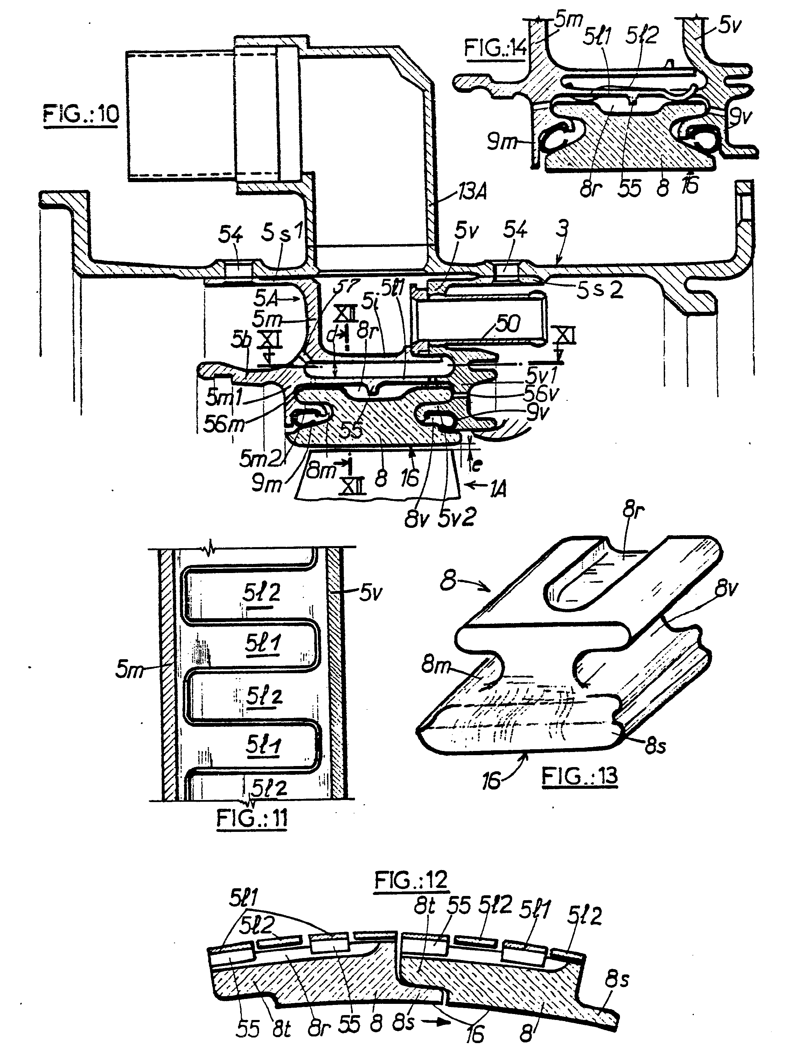

Sur la vue en coupe axiale de la figure 10, 1A désigne le rotor d'un étage de turbine d'une turbomachine, qui est entouré, avec un certain jeu, e, par un anneau, lequel est fixé au carter 3 de la turbine, et est constitué, selon une seconde forme de réalisation de la présente invention, de la façon suivante : il est formé essentiellement par un anneau métallique 5A, dont les parois amont et aval, 5m et 5v, sont formées par deux brides radiales, qui sont fixées intérieurement au carter par deux brides longitudinales, 5s1 et 5s2 respectivement. La fixation peut être assurée par deux rangées de rivets 54, ou de boulons équivalents. La bride radiale 5m est prolongée, vers l'amont, par une bride longitudinale, 5b, qui peut servir à assujettir l'anneau métallique 5A au distributeur (non représenté), de l'étage considéré de la turbine, comme cela a été représenté et décrit précédemment sur la figure 1. Les deux brides radiales 5m et 5v sont prolongées vers le bas par des organes radiaux de support, 5m1 et 5v1, qui portent eux-mêmes, sur leurs faces tournées l'une vers l'autre, des brides sensiblement longitudinales, 5m2 et 5v2 ; ces brides longitudinales, 5m2 et 5v2, sont engagées respectivement dans les gorges, 8m et 8v, aménagées respectivement dans les bords amont et aval d'un segment en céramique 8, qui est représenté en perspective sur la figure 13. Des joints d'étanchéité, 9m et 9v, en forme de tore fendu, sont interposés entre les parties 5m2 et 5v2 des organes de support, d'une part, et les surfaces internes des gorges 8m et 8v des différents segments en céramique 8, de telle sorte que ces joints soient serrés par les parties mentionnées des organes de support, de manière à empêcher les gaz très chauds de passer de l'enceinte balayée par les aubes de la turbine vers la face externe des segments en céramique 8, en contournant les brides longitudinales 5m2 et 5v2.

Par ailleurs, la bride radiale amont, 5m, est prolongée vers l'aval, à une certaine distance radiale des segments en céramique 8, par une bride longitudinale 5i, qui constitue la paroi interne de l'anneau métallique 5A, et dont l'extrémité est réunie de façon étanche à la partie correspondante de la bride radiale aval 5v, par exemple par une rangée de boulons, non représentés. A une certaine distance, d, en dessous de la bride longitudinale 5i, les deux brides radiales, 5m et 5v, présentent, sensiblement au niveau de leurs raccordements avec 5m1 et 5v1, sur leurs faces respectives tournées l'une vers l'autre, deux séries de languettes, 5l1 et 5l2, qui sont de préférence suffisamment minces pour être élastiques, et qui sont interposées les unes entre les autres comme visible sur la vue développée en coupe de la figure 11 ; ces languettes métalliques, élastiques, 5l1 et 5l2, sont disposées de façon à exercer sur la face externe de chaque segment en céramique 8 une poussée qui l'applique élastiquement sur les organes de support, 5m2 et 5v2. Dans une forme de réalisation préférée, qui a été représentée sur la figure 14, chacune des languettes 5l1 et 5l2 s'applique par son extrémité arrondie seulement sur la face externe du segment en céramique 8 correspondant. D'autre part, les languettes de l'une au moins des deux séries, par exemple les languettes 5l1, portent chacune une saillie médiane 55 (voir aussi la figure 12), qui est engagée dans une rainure médiane, 8r, de la face externe du segment 8 correspondant, de façon à immobiliser en rotation dans un sens au moins l'anneau formé par les segments ; en fait, comme le rotor d'une turbomachine tourne toujours dans le même sens, la composante tangentielle — c'est-à-dire périphérique — de l'impulsion qu'il peut communiquer à certains au moins des segments 8 en cas d'annulation du jeu e (figure 10) est toujours de même sens, si bien que, comme visible sur les figures 12 et 13, la rainure 8r prévue sur la face externe de chacun des segments 8 peut être ouverte à une extrémité et fermée à son extrémité opposée. Comme visible sur la figure 12, les bords longitudinaux voisins des segments en céramique sont conformés, au voisinage de leurs faces internes, qui peuvent porter un revêtement 16 d'un matériau abradable, de manière que leurs bords longitudinaux se recouvrent avec emboîtement à la façon de tuiles ; ceci peut être obtenu en aménageant vers l'extérieur du segment en céramique un talon 8t dans l'un des bords périphériques de chaque segment 8, et une saillie 8s sur son autre bord périphérique, cette saillie 8s étant adaptée pour venir s'engager sous le talon 8t du segment 8 voisin avec un certain jeu dans la direction périphérique, pour compenser éventuellement les différences de dilatation entre les segments en céramique 8, d'une part, et les organes radiaux de support, métalliques, 5m1-5m2, 5v1-5v2, d'autre part.

Une conduite radiale 13A, traversant le carter 3 de la turbine au niveau de l'anneau 5A, au moyen d'une tubulure appropriée, peut amener à l'intérieur de l'anneau métallique 5A, par sa face externe ouverte, de l'air de ventilation, qui a été prélevé par exemple dans un étage du compresseur de la turbomachine, qui a été convenablement choisi du point de vue de la pression et de la température de l'air circulant dans cet étage du compresseur. L'air de ventilation amené par la conduite radiale 13A vient frapper directement la paroi interne 5i de l'anneau métallique 5A, et balaye également ses parois radiales, 5m et 5v. D'autre part, des perçages 56m et 56v traversent les brides radiales au niveau de leurs parties 5m1 et 5v1 respectivement, de façon à faire communiquer l'enceinte dans laquelle tournent les aubes de la turbine avec les parties de chaque segment 8 en céramique, sur lesquelles sont appliquées les deux séries de languettes 5l1 et 5l2. De plus, la paroi 5m est percée au voisinage de son prolongement longitudinal 5b par des trous 57 faisant communiquer l'enceinte extérieure aux languettes 5l1, 5l2 avec une enceinte sous pression, par exemple l'enceinte extérieure au(x) tube(s) à flamme de la chambre de combustion de la turbomachine. De ce fait l'air qui passe par les trous 57 puis par les solutions de continuité entre les languettes 5l1 et 5l2 puis par les trous 56m et 56v sert d'air de barrage pour empêcher la remontée des gaz très chauds de l'enceinte balayée par les aubes de turbine vers les parties métalliques supportant l'anneau en segments céramiques.

La forme de réalisation de l'invention qui vient d'être décrite à l'aide des figures 10 à 14, présente notamment l'avantage que, en cas d'annulation du jeu e (figure 10), les différents segments en céramique 8 peuvent s'effacer dans la direction axifuge par déformation élastique des languettes 5l1 et 5l2, ce qui évite tout endommagement ou toute rupture des segments en céramique.

L'air de ventilation amené par la conduite radiale 13A à l'intérieur de l'anneau métallique 5A peut s'en échapper ensuite par une conduite longitudinale 50, traversant la bride radiale 5v, en direction du distributeur (non représenté) de l'étage suivant de la turbine.

Pour l'interface entre des segments voisins de la solution décrite dans les figures 10 à 14 le système de tenons et mortaises décrit dans la première forme de réalisation de l'invention (figures 1 à 9) peut être employé ou, inversement pour la première forme de réalisation de l'invention, des segments ayant un recouvrement « en tuile » tel que décrit pour la deuxième forme de réalisation de l'invention peuvent être employés.

**Revendications**

1. Turbomachine comportant un anneau d'étanchéité pour un rotor de turbine, comprenant un écran thermique annulaire, formé essentiellement par des segments (8) en matériau céramique, dont les bords amont et aval présentent des gorges semi-annulaires (8m, 8V) et dont les faces internes portent un matériau abradable (16), un anneau métallique (5A, 5B) à section évidée, monté à l'intérieur du carter (3) de la turbine, et portant des organes radiaux de support (5m2, 5v2), adaptés pour s'engager dans les gorges (8m, 8v) des segments (8) en céramique, et des moyens pour envoyer de l'air dans l'évidement intérieur de l'anneau métallique (5A, 5B), et vers les faces externes des segments (8) en céramique, caractérise en ce que l'anneau métallique (5A, 5B) coopère avec des moyens de montage à l'intérieur du carter (3) de façon à pouvoir se dilater librement dans l'une au moins des directions radiale, longitudinale et périphérique, ces moyens de montage comprenant deux faces radiales (5m, 5v) sensiblement planes de l'anneau métallique (5A, 5B) qui coopèrent avec deux brides radiales (4m, 4v), également planes, qui sont solidaires intérieurement du carter (3), les organes radiaux de support (5m2, 5v2) prolongeant radialement vers l'axe de la turbine lesdites faces radiales (5m, 5v) dudit anneau métallique (5A, 5B) sous la forme de deux collerettes annulaires (5m2, 5v2) engagées dans lesdites gorges (8m, 8v) des segments (8) et ayant en outre sur leurs faces latérales externes des gorges, et que des joints appropriés (9m, 9v) sont interposés entre certains éléments de l'anneau (5A, 5B) et des pièces correspondantes, solidaires du carter (3), de façon à assurer l'étanchéité de l'anneau (5A, 5B) malgré les dilatations/contractions d'origine thermique, lesdits joints d'étanchéité (9m, 9v) étant logés dans lesdites gorges aménagées sur les faces externes des organes radiaux de support (5m2, 5v2).

2. Turbomachine comportant un anneau selon la revendication 1, caractérisée en ce que les segments (8) en céramique ont leurs bords longitudinaux voisins assemblés par tenon (8a) et mortaise (8b), avec un jeu autorisant des déplacements desdits segments (8) dans la direction périphérique les unes par rapport aux autres, déplacements dus à leurs dilatations et à celle de l'anneau métallique (5A, 5B) dans la direction périphérique.

3. Turbomachine comportant un anneau selon l'une des revendications 1 ou 2 caractérisée en ce que la partie médiane de chaque segment (8) en céramique est immobilisée par rapport à la partie correspondante de l'anneau métallique (5A, 5B) par au moins une broche (8d), qui traverse une encoche (8c) dudit segment (8), et dont les extrémités sont assujetties aux faces radiales (5m1, 5v1) de l'anneau métallique (5A, 5B).

4. Turbomachine comportant anneau selon l'une quelconque des revendications 1 à 3, caractérisée en ce que l'anneau d'étanchéité comporte en outre des moyens pour immobiliser l'une au moins des faces radiales (5m, 5v) de l'anneau métallique (5A, 5B) par rapport à la bride radiale (4m, 4v) avec laquelle elle coopère, avec un jeu autorisant la libre dilatation dudit anneau (5A, 5B) dans l'une au moins des directions périphérique et radiale, lesdits moyens d'immobilisation étant formés par des saillies ou crans (10m, 10v) et des évidements (19m, 19v) aménagés respectivement sur les faces radiales (5m, 5v) de l'anneau (5A, 5B)

et sur les brides correspondantes (4m, 4v), de façon à coopérer les uns avec les autres, avec un certain jeu dans l'une au moins des directions périphérique et radiale.

5. Turbomachine comportant un anneau selon l'une quelconque des revendications 1 à 4, caractérisé en ce que les deux brides annulaires (4m, 4v), coopérant avec les faces radiales (5m, 5v) de l'anneau métallique (5A, 5B), sont réunies par un anneau cylindrique (4m1), qui entoure coaxialement, avec un certain jeu radial (jA), la paroi externe (5e) dudit anneau métallique (5A, 5B), et qui est solidaire de l'une au moins des deux brides radiales (4m, 4v), avec lesquelles il forme une sorte de gouttière, ouverte radialement vers l'intérieur.

6. Turbomachine comportant un anneau selon l'une quelconque des revendications 1 à 5, caractérisé en ce que l'anneau métallique (5A, 5B) est formé par deux demi-coquilles annulaires (5A1, 5A2), à section en U, qui sont assemblées, dans un plan radial, par des broches ou des entretoises (18) longitudinales, réparties régulièrement le long dudit anneau (5A, 5B).

7. Turbomachine comportant un anneau selon l'une quelconque des revendications 1 à 6, caractérisée en ce que chaque collerette annulaire (5m2, 5v2) solidaire des parois radiales (5m, 5v) de l'anneau métallique (5A, 5B), présente des fentes radiales (f), réparties régulièrement le long de leur périphérie.

8. Turbomachine comportant un anneau selon l'une quelconque des revendications 1 à 7, caractérisée en ce qu'au moins un organe élastiquement déformable (20a, 20b) est interposé entre chaque segment (8) en céramique et la partie correspondante de l'anneau métallique (5A, 5B), sous la forme d'au moins une lame de ressort, qui est disposée longitudinalement et dont la partie médiane est assujettie à la paroi interne (5i) de l'anneau métallique (5A, 5B), tandis que ses extrémités coopèrent respectivement avec les parties amont et aval du segment en céramique, lesquelles sont munies à cet effet de rainures longitudinales (22) pour positionner lesdites extrémités de la lame de ressort (20a, 20b).

9. Turbomachine comportant un anneau d'étanchéité pour un rotor de turbine, comprenant un écran thermique annulaire, formé essentiellement par des segments (8) en matériau céramique, dont les bords amont et aval présentent des gorges (8m, 8v) semi-annulaires et dont les faces internes portent un matériau abradable (16), un anneau métallique (5A) à section évidée, monté à l'intérieur du carter (3) de la turbine et portant des organes de support (5m2, 5v2) adaptés pour s'engager dans les gorges (8m, 8v) des segments (8) en céramique, et des moyens pour envoyer de l'air dans l'évidement intérieur de l'anneau métallique (5A) et vers les faces externes des segments (8) en céramique, caractérisée en ce que l'anneau métallique (5A) comporte deux brides radiales (5m, 5v) fixées intérieurement au carter (3) et prolongées en direction de l'axe de la turbine par des parties radiales (5m1, 5v1) qui portent des brides longitudinales (5m2, 5v2) qui sont engagées dans lesdites gorges (8m, 8v) des segments (8) et qui sont adaptées pour retenir, dans lesdites gorges, des joints d'étanchéité (9m, 9v) en forme de tores creux fendus.

10. Turbomachine comportant un anneau selon la revendication 9, caractérisée en ce que les deux brides radiales (5m, 5v) présentent, sur leurs faces respectives tournées l'une vers l'autre, deux séries de languettes (5l1, 5l2), élastiques, qui sont interposées les unes entre les autres et disposées de façon à exercer sur la face externe de chaque segment (8) en céramique une poussée, qui l'applique, élastiquement sur les organes radiaux de support (5m2, 5v2).

11. Turbomachine comportant anneau selon la revendication 10, caractérisée en ce que chaque languette (5l1, 5l2) s'applique par son extrémité arrondie seulement sur la face externe du segment (8) en céramique correspondant.

12. Turbomachine comportant un anneau selon l'une quelconque des revendications 10 et 11, caractérisée en ce que les languettes de l'une au moins des deux séries (5l1) portent chacune une saillie médiane (55), engagée dans une rainure médiane (8r) de la face externe du segment (8) correspondant, de façon à immobiliser l'anneau formé par les segments (8), en rotation dans un sens au moins.

13. Turbomachine comportant un anneau selon l'une quelconque des revendications 9 à 12, caractérisée en ce que les bords longitudinaux voisins des segments (8) en céramique sont conformés, au voisinage des faces internes desdits segments, de manière que leurs bords longitudinaux (8t, 8s) se recouvrent avec emboîtement à la façon de « tuiles ».

14. Turbomachine comportant un anneau selon l'une quelconque des revendications 9 à 13, caractérisée en ce que les brides radiales sont traversées par des perçages de ventilation (56m, 56v), qui font communiquer l'enceinte de chambre de la turbine avec les parties de chaque segment (8) en céramique, sur lesquelles sont appliquées les deux séries de languettes (5l1, 5l2).

15. Installation de turbomachine, dont les rotors de la turbine à haute pression sont entourés chacun par un anneau fixe selon l'une quelconque des revendications 1 à 14, caractérisée en ce qu'au moins une première conduite (13A, 13B) amène, dans l'évidement intérieur de l'anneau métallique (5A, 5B) associé à chaque étage de la turbine à haute pression, de l'air de ventilation prélevé, sous une première pression déterminée, dans l'enceinte entourant le(s) tube(s) à flamme de la chambre de combustion de la turbomachine et/ou dans un étage convenablement choisi du ou des compresseurs.

16. Installation selon la revendication 15, caractérisée en ce que la première conduite (13A, 13B) débouche dans un distributeur annulaire perforé (15), qui est disposé dans l'évidement intérieur de l'anneau métallique (5A, 5B) correspondant, de façon que l'air de ventilation vienne frapper la surface interne dudit anneau métallique (5A, 5B) ainsi que ses surfaces radiales.

17. Installation selon la revendication 15, caractérisée en ce que la sortie de la première conduite d'amenée d'air est raccordée à l'évidement intérieur de l'anneau métallique (5A, 5B), notamment au collecteur annulaire (15), par au moins une tubulure souple (14A, 14B), en forme de soufflet.

18. Installation selon l'une quelconque des revendications 15 à 17, caractérisée en ce que le débit d'air dans la première conduite (13A, 13B) est contrôlé par un boisseau (41) asservi à un paramètre de fonctionnement de la turbine.

19. Installation selon la revendication 18, comportant un calculateur (40) du type dit « à pleine autorité », dont des entrées sont reliées à un capteur de régime (N2) de la turbine et à un capteur de la pression (Ps3) régnant dans la chambre de combustion (35) caractérisée en ce qu'une sortie dudit calculateur (40) est reliée au boisseau (41) de contrôle de débit d'air de telle sorte que ledit boisseau (41) en fonction du signal élaboré par le calculateur (40) à partir des informations relatives au régime (N2) et à la pression (Ps3) peut mettre en communication les premières conduites (13A, 13B), respectivement associées aux différents étages de la turbine à haute pression, soit avec de l'air froid, soit avec de l'air chaud, prélevés respectivement dans des étages différents du ou des compresseurs, soit une proportion variable de chacun des prélèvements.

20. Installation selon la revendication 19, caractérisée en ce que l'air froid est prélevé à la sortie de la soufflante (33) et l'air chaud dans un étage du compresseur à haute pression (34) proche de sa sortie, et que des canalisations sont aménagées pour collecter l'air sortant des évidements intérieurs des différents anneaux (5A, 5B) de la turbine à haute pression, et pour le guider vers une conduite radiale unique (32a), aboutissant au carter d'échappement de la turbine.

21. Installation selon l'une quelconque des revendications 15 à 19, caractérisée en ce que l'air froid est prélevé en aval du troisième étage de redresseur du compresseur à haute pression (34), et l'air chaud, dans un étage du compresseur à haute pression proche de sa sortie, et que l'air sortant des évidements intérieurs des différents anneaux (5A, 5B) de la turbine à haute pression est évacué en amont de la turbine à basse pression.

22. Installation selon l'une quelconque des revendications 15 à 21, caractérisée en ce que des secondes conduites (44, 50), traversant les anneaux métalliques (5A, 5B) associés aux différents étages de la turbine à haute pression, dirigent de l'air de pressurisation, sous une seconde pression déterminée, notablement supérieure à celle régnant dans l'étage correspondant de la turbine, vers les faces externes des différents segments (8) en céramique, notamment vers des cavités (8e) aménagées dans leurs faces externes respectives et vers les surfaces d'appui de chaque segment (8) avec les segments voisins et avec les organes radiaux de support amont et aval.

23. Installation selon la revendication 22, comportant une turbine à haute pression à deux étages, et caractérisée en ce que les secondes conduites (44) associées au premier étage de la turbine à haute pression sont alimentées avec de l'air prélevé dans un étage du compresseur à haute pression (34) proche de sa sortie.

24. Installation selon la revendication 22, caractérisée en ce que l'espace (8e) compris entre l'anneau (5A) du premier étage de turbine et les segments (8) d'anneaux en céramique est alimenté par un prélèvement à l'extérieur du (des) tube(s) à flamme de la chambre de combustion par l'intermédiaire d'un circuit (52-53-49).

25. Installation selon la revendication 23 ou 24 caractérisée en ce que les secondes conduites (50) associées au second étage de la turbine à haute pression sont alimentées avec une fraction de l'air de ventilation destiné au premier étage de ladite turbine à haute pression.

**Claims**

1. Turbomachine comprising a sealing ring for a turbine rotor, including an annular thermal screen, formed substantially by segments (8) of a ceramic material, of which the upstream and downstream edges define part-annular grooves (8m, 8v) and of which the inner faces carry an abradable material (16), a metal ring (5A, 5B) of hollow section, mounted within the casing (3) of the turbine, and carrying radial support members (5m2, 5v2), adapted to engage with the grooves (8m, 8v) of the ceramic segments (8), and means for supplying air to the hollow interior of the metal ring (5A, 5B), and to the outer faces of the ceramic segments (8), characterized in that the metallic ring (5A, 5B) cooperates with mounting means within the interior of the casing (3) in such a way as to provide for free expansion in one at least of the directions, radial, longitudinal and peripheral, these mounting means comprising two radial substantially plane faces (5m, 5v) of the metallic ring (5A, 5B) which cooperate with two radial flanges (4m, 4v), likewise plane, which are connected internally of the casing (3), the radial support members (5m2, 5v2) extending radially towards the axis of the turbine and said radial faces (5m, 5v) of the said metallic ring (5A, 5B) having the form of two annular collars (5m2, 5v2) engaged in said grooves (8m, 8v) of the segments (8) and having furthermore on their lateral faces external grooves, and that appropriate seals (9m, 9v) are interposed between certain elements of the ring (5A, 5B) and corresponding parts, rigid with the casing (3), so as to ensure fluid tightness of the ring (5A, 5B) despite expansions/contractions of thermal origin, the said fluid tight seals (9m, 9v) being located in the said grooves formed in the external faces of the radial support members (5m2, 5v2).

2. Turbomachine comprising a ring according to claim 1, characterized in that the segments (8) of ceramic have their longitudinal adjacent edges interchanged by tongue (8a) and groove (8b), with a clearance enabling displacement of the said segments (8) in the peripheral direction the ones with respect to the others, such displacements resulting from their expansions and from that of the metallic ring (5A, 5B) in the peripheral direction.

3. Turbomachine comprising a ring according to one of claims 1 or 2 characterized in this that the median part of each ceramic segments (8) is restrained with respect to the corresponding part of the metallic ring (5A, 5B) by means of at least one peg (8d), which traverses a notch (8c) of the said segment (8), and of which the ends are fixed to the radial faces (5m1, 5v1) of the metallic ring (5A, 5B).

4. Turbomachine comprising a ring according to any one of claims 1 to 3, characterized in this that the sealing ring comprises furthermore means for immobilising one at least of the radial faces (5m, 5v) of the metallic ring (5A, 5B) with respect to the radial flange (4v) with which it cooperates, with a clearance enabling free expansion of the said ring (5A, 5B) in one at least of the directions peripheral and radial, the said immobilisation means being formed by projections or notches (10m, 10v) and recesses (19m, 19v) provided respectively in the radial faces (5m, 5v) of the ring (5A, 5B) and on corresponding flanges (4m, 4v) so as to cooperate the ones with the others, with a predetermined clearance in one at least of the directions peripheral and radial.

5. Turbomachine comprising a ring according to any one of claims 1 to 4, characterized in that the two annular flanges (4m, 4v), cooperating with the radial faces (5m, 5v) of the metallic ring (5A, 5B) are interconnected by a cylindrical ring (4m1), which surround coaxially, with a predetermined radial clearance (jA), the outer wall, (5e) of the said metallic ring (5A, 5B), and which is rigid with one at least of the two radial flanges (4m, 4v), with which it forms a type of gutter radially open inwardly.

6. Turbomachine comprising a ring according to any one of claims 1 to 5, characterized in that the metallic ring (5A, 5B) is formed by two semi-annular shells (5A1, 5A2), of U-section, which are assembled on a radial plane, by pegs or struts (18), regularly distributed along the said ring (5A, 5B).

7. Turbomachine comprising a ring according to any one of claims 1 to 6, characterized in that each annular collar (5m2, 5v2), rigid with radial walls (5m, 5v) of the metallic ring (5A, 5B), have radial slots (f), regularly distributed along their periphery.

8. Turbomachine comprising a ring according to any one of claims 1 to 7, characterized in that at least one deformable resilient member (20a, 20b) is interposed between each segment (8) of ceramic and the corresponding part of the metallic ring (5A, 5B), in the form of at least one laminar spring, which is longitudinally disposed and of which the median part is connected to the internal wall (5i) of the metallic ring (5A, 5B), whilst its ends cooperate respectively with the upstream and downstream parts of the ceramic segment, which are provided to this end with longitudinal grooves (22) for positioning the said ends of the laminar spring (20a, 20b).

9. Turbomachine comprising a sealing ring for a turbine rotor, comprising an annular thermal screen, formed substantially by segments (8) of ceramic material, of which the upstream and downstream edges have grooves (8m, 8v) which are part-annular and of which the internal faces support an abradable material (16) a metallic ring (5A) of hollow section, mounted within the interior of the casing (3) of the turbine and carrying support members (5m2, 5v2) adapted to engage in the grooves (8m, 8v) of the ceramic segments (8), and means for supplying air into the hollow interior of the metallic ring (5A) and towards the outer faces of the ceramic segments (8), characterized in this that the metallic ring (5A) comprises two radial flanges (5m, 5v) secured internally of the casing (3) and extended in the direction of the axis of the turbine by radial parts (5m1, 5v1) which support longitudinal flanges (5m2, 5v2) which are engaged in the said flanges (8m, 8v) of the segments (8) and which are adapted to retain, within the said grooves, fluid tights seals (9m, 9v) in the form of hollow slotted torus.

10. Turbomachine comprising a ring according to claim 9, characterized in that the said two radial flanges (5m, 5v) have, on their respective faces directed towards one another, two series of small resilient tongues (5l1, 5l2), which are interposed between one another and located in such a manner as to exert on the outer face of each ceramic segment (8) a thrust, which is applied, resiliently on the radial support members (5m2, 5v2).

11. Turbomachine comprising a ring according to claim 10, characterized in that each small tongue (5l1, 5l2) is applied by its rounded end only on the outer face of the corresponding ceramic segment (8).

12. Turbomachine comprising a ring according to any one of claims 10 and 11, characterized in this that the tongues of one at least of the two series (5l1) each carry a median projection (55), engaged in a median groove (8r) of the corresponding outer face of the segment (8), in such a way as to immobilize the ring formed by the segments (8) in rotation in at least one sense.

13. Turbomachine comprising a ring according to any one of claims 9 to 12, characterized in that the longitudinal adjacent edges of the ceramic segments (8) are shaped, in the vicinity of the internal faces of the said segments, so that their longitudinal edges (8t, 8s) secure one another with a casing in the manner of « tiles ».

14. Turbomachine comprising a ring according to any one of claims 9 to 13, characterized in that the radial flanges are traversed by ventillation holes (56m, 56v), which provide communication between the enclosure of the chamber of the turbine with parts of each ceramic segment (8), on which are applied two series of tongues (5l1,

5l2).

15. Turbomachine installation, of which the rotors of the high pressure turbine are each surrounded by a fixed ring according to any one of the claims 1 to 14, characterized in that at least a first duct (13A, 13B) leads, into the hollow interior of the metallic ring (5A, 5B) associated with each stage of the high pressure turbine, cooling air being withdrawn, under a predetermided first pressure, from the enclosure surrounding the main tube or tubes of the combustion chamber of the turbomachine and/or when a suitable stage is selected from one or more of the compressors.

16. Installation according to claim 15, characterized in that the first duct (13A, 13B) discharges into an annular perforate distributor (15), which is disposed in the hollow interior of the metallic ring (5A, 5B) corresponding thereto, in such a manner that the cooling air impacts the internal surface of the said metallic ring (5A, 5B) as well as its radial surfaces.

17. Installation according to claim 15, characterized in that the outlet of the first duct for supplying air is connected to the hollow interior of the metallic ring (5A, 5B), and particularly to the annular collector (15), by at least one flexible tubular arrangement (14A, 14B), in the form of a bellows.

18. Installation according to any one of claims 15 to 17, characterized in that the flow of air in the first duct (13A, 13B) is controlled by a valve (41) itself controlled in accordance with an operational parameter of the turbine.

19. Installation according to claim 18, comprising a computer (40) of the type termed « with full authority », of which the inputs are.connected to a rating sensor (N2) of the turbine and a pressure sensor (Ps3) disposed within the combustion chamber (35) characterized in that one output of the said computer (40) is connected to the throttle (41) for the control of flow of air in such a manner that the said throttle (41) as a function of the signal developed by the computer (40) on the basis of relative signals of the rating (N2) and of the pressure (Ps3) can be placed in communication with the first ducts (13A, 13B), respectively associated with various stages of the high pressure turbine, either with cold air, or with hot air, bled respectively from different stages of the compressor or compressors, or a variable proportion of each of these bleeds.

20. Installation according to claim 19, characterized in that the cold air is bled from the outlet of the fan (33) and the hot air from a stage of the high pressure compressor (34) adjacent to its outlet, and that passages are provided for collecting air leaving interior spaces of the different rings (5A, 5B) of the high pressure turbine, and for guiding it towards a single radial duct (32a), terminating at the exhaust casing of the turbine.

21. Installation according to any one of claims 15 to 19, characterized in that the cold air is bled downstream of a third stage of the flow straightener of the high pressure compressor (34), and the hot air, at a stage of the high pressure compressor adjacent to its outlet, and that the air leaving the internal spaces of the various rings (5A, 5B) of the high pressure turbine is exhausted upstream of the low pressure turbine.

22. Installation according to any one of claims 15 to 21, characterized in that the second ducts (44, 50), traversing the metallic rings (5A, 5B) associated with different stages of the high pressure turbine, direct the pressurization air, at a second predetermined pressure, in particular in excess of that existing in the corresponding stage of the turbine, towards the outer faces of the various ceramic segments (8), particularly towards the cavities (8e) provided in their external respective faces and towards the contact surfaces of each segment (8) with adjacent segments and with both upstream and downstream radial support members.

23. Installation according to claim 22, comprising a high pressure turbine with two stages, and characterized in that the second ducts (44) associated with a first stage of high pressure turbine are supplied with air bled from a stage of the high pressure compressor (34) adjacent to its outlet.

24. Installation according to claim 22, characterized in that the space (8e) lying between the ring (5A) of the first stage of the turbine and the segments (8) of the ceramic rings is supplied through a bleed on the outside of the flame tube or tubes of the combustion chamber through the intermediary of the circuit (52-53-49).

25. Installation according to claim 23 or 24 characterized in that the second ducts (50) associated with this second stage of the high pressure turbine are supplied with a fraction of the cooling air intended for the first stage of the said high pressure turbine.

## Patentansprüche

1. Turbomaschine mit einem Dichtungsring für einem Turbinenrotor mit einer ringförmigen thermischen Abschirmung, die im wesentlischen von Segmenten (8) aus keramischen Material gebildet ist, deren stromaufwärtige und stromabwärtige Ränder halbringförmige Kehlen (8m, 8v) aufweisen und deren Innenseiten ein Verschleißmaterial (16) tragen, mit einem Metallring (5A, 5B) mit Hohlquerschnitt, der im Innern des Turbinengehäuses (3) montiert ist und radiale Halterungsorgane (5m2, 5v2) trägt, die für einen Eingriff mit den Kehlen (8m, 8v) der Keramiksegmente (8) ausgebildet sind, sowie mit Mitteln für die Zuführung von Luft in den inneren Hohlraum des Metallrings (5A, 5B) und zu den Außenflächen der Keramiksegmente (8), dadurch gekennzeichnet, daß der Metallring (5A, 5B) im Innern des Gehäuses (3) mit Montagemitteln derart zusammenwirkt , daß er sich in radialer, longitudinaler und Umfangsrichtung oder in wenigstens einer dieser Richtungen frei ausdehnen kann, daß diese Montagemittel zwei im wesentlichen ebene Radialflächen (5m, 5v) des Metallrings (5A, 5B) umfassen, die mit zwei ebenfalls ebenen radialen Flanschen (4m, 4v) zusammenwirken, welche mit dem Gehäuse (3) innen fest verbunden sind, wobei die radialen Halterungsorgane (5m2, 5v2) die genannten Radialflächen (5m, 5v) des Metallrings (5A, 5B) in Richtung auf die Achse der Turbine in Form zweier ringförmiger Kragen (5m2, 5v2) radial verlängern, die in die genannten Kehlen (8m, 8v) der Segmente (8) eingreifen und die außerdem auf ihren äußeren Seitenflächen Kehlen besitzen, daß zwischen vorbestimmte Elemente des Metallrings (5A, 5B) und korrespondierende, mit dem Gehäuse (3) fest verbundene Teile geeignete Dichtungen (9m, 9v) derart eingefügt sind, daß die Dichtigkeit des Metallrings (5A, 5B) trotz Ausdehnungen oder Kontraktionen thermischen Ursprungs gewährleistet ist, und daß die genannten Dichtungen (9m, 9v) in den an den Außenflächen der radialen Halterungsorgane (5m2, 5v2) angebrachten Kehlen aufgenommen sind.

2. Turbomaschine mit einem Dichtungsring nach Anspruch 1, dadurch gekennzeichnet, daß die einander benachbarten longitudinalen Ränder der Keramiksegmente (8) durch Zapfen (8a) und Zapfenlöcher (8b) zusammengefügt sind, wobei ein Spiel vorgesehen ist, das eine relative Verschiebung der Keramiksegmente (8) zueinander in Umfangsrichtung ermöglicht, die durch ihre Ausdehnungen und die Ausdehnung des Metallrings (5A, 5B) in Umfangsrichtung verursacht sind.

3. Turbomaschine mit einem Dichtungring nach einem der Ansprüche 1 oder 2, dadurch gekennzeichnet, daß der Mittelteil jedes Keramiksegments (8) gegenüber dem entsprechenden Teil des Metallrings (5A, 5B) durch wenigstens einen Stift (8d) festgelegt ist, der durch eine Kerbe (8c) des Keramiksegments (8) läuft und dessen Enden an den Radialflächen (5ml, 5vl) des Metallrings (5A, 5B) befestigt sind.

4. Turbomaschine mit einem Dichtungsring nach einem der Ansprüche 1 bis 3, dadurch gekennzeichnet, daß der Dichtungsring ferner Mittel besitzt, durch die wenigstens eine der Radialflächen (5m, 5v) des Metallrings (5A, 5B) gegenüber dem mit ihm zusammenwirkenden radialen Flansch (4m, 4v) derart festlegbar ist, daß ein Spiel vorhanden ist, welches eine freie Ausdehnung des Metallrings (5A, 5B) zumindest in Umfangsrichtung ermöglicht, wobei diese Festlegungsmittel von Vorsprüngen oder Stufen (10m, 10v) und Ausnehmungen (19m, 19v) gebildet sind, die an den Radialflächen (5m, 5v) des Metallrings (5A, 5B) bzw. an den korrespondierenden Flanschen (4m, 4v) derart angebracht sind, daß sie in Umfangs- und radialer oder in wenigstens einer dieser Richtungen mit einem bestimmten Spiel zusammenarbeiten.

5. Turbomaschine mit einem Dichtungsring nach einem der Ansprüche 1 bis 4, dadurch gekennzeichnet, daß die beiden ringsförmigen Flansche (4m, 4v), die mit den Radialflächen (5m, 5v) des Metallrings (5A, 5B) zusammenarbeiten, durch einen zylindrischen Ring (4ml) miteinander verbunden sind, der die Außenwandung des Metallrings (5A, 5B) mit einem bestimmten radialen Spiel (jA) koaxial umgibt und der mit wenigstens einem der beiden radialen Flansche (4m, 4v) fest verbunden ist und mit diesem eine Art von Rinne bildet, die radial nach innen offen ist.

6. Turbomaschine mit einem Dichtungsring nach einem der Ansprüche 1 bis 5, dadurch gekennzeichnet, daß der Metallring (5A, 5B) aus zwei ringförmigen Halbschalen (5A1, 5A2) mit U-förmigen Querschnitt gebildet ist, die in einer radialen Ebene durch longitudinale Stifte oder Bolzen (18) zusammengefügt sind, die längs des Metallrings (5A, 5B) gleichmäßig verteilt sind.

7. Turbomaschine mit einem Dichtungsring nach einem der Ansprüche 1 bis 6, dadurch gekennzeichnet, daß jeder der mit radialen Wandungen (5m, 5v) des Metallrings (5A, 5B) fest verbundenen ringförmigen Kragen (5m2, 5v2) radiale Schlitze (f) besitzt, die längs ihres Umfangs gleichmäßig verteilt sind.

8. Turbomaschine mit einem Dichtungsring nach einem der Ansprüche 1 bis 7, dadurch gekennzeichnet, daß zwischen jedem Keramiksegment (8) und dem entsprechenden Teil des Metallrings (5A, 5B) wenigstens ein elastisch verformbares Organ (20a, 20b) in Form wenigstens einer Federlamelle eingefügt ist, die longitudinal angeordnet ist und deren Mittelteil an der inneren Wandung (5i) des Metallrings (5A, 5B) befestigt ist, während ihre Enden mit den stromaufwärtigen bzw. stromabwärtigen Teilen des Keramiksegments zusammenwirken, die zu diesem Zweck mit Längsnuten (22) zur Positionierung der genannten Enden der Federlamelle (20a, 20b) versehen sind.

9. Turbomaschine mit einem Dichtungsring für einen Turbinenrotor mit einer ringförmigen thermischen Abschirmung, die im wesentlichen von Segmenten (8) aus keramischen Material gebildet ist, deren stromaufwärtige und stromabwärtige Ränder halbringförmige Kehlen (8m, 8v) aufweisen und deren Innenseiten ein Verschleißmaterial (16) tragen, mit einem Metallring (5A) mit Hohlquerschnitt, der im Innern des Turbinengehäuses (3) montiert ist und radiale Halterungsorgane (5m2, 5v2) trägt, die derart ausgebildet sind, daß sie in die Kehlen (8m, 8v) der Keramiksegmente (8) eingreifen können, sowie mit Mitteln für die Zuführung von Luft in den inneren Hohlraum des Metallrings (5A) und zu den Außenflächen der Keramiksegmente (8), dadurch gekennzeichnet, daß der Metallring (5A) zwei radiale Flansche (5m, 5v) besitzt, die innen an dem Gehäuse (3) befestigt und in Richtung auf die Achse der Turbine durch radiale Teile (5m1, 5v1) verlängert sind, die longitudinale Flansche (5m2, 5v2) tragen, welche mit den genannten Kehlen (8m, 8v) der Keramiksegmente (8) im Eingriff stehen und derart ausgebildet sind, daß sie Dichtungen (9m, 9v) in Form geschlitzter Ringwulsthohkörper in den genannten Kehlen halten können.

10. Turbomaschine mit einem Dichtungsring nach Anspruch 9, dadurch gekennzeichnet, daß die beiden radialen Flansche (5m, 5v) auf ihren einander zugekehrten Seiten zwei Reihen elastischer Zungen (5l1, 5l2) aufweisen, die derart zwischeneinander angeordnet sind, daß sie auf die Außenflächen jedes der Keramiksegmente (8) einen Druck ausüben, durch den dieses elastisch gegen die radialen Halterungsorgane (5m2, 5v2) angedrückt werden.

11. Turbomaschine mit einem Dichtungsring nach Anspruch 10, dadurch gekennzeichnet, daß jede Zunge (5l1, 5l2) über ihr abgerundetes Ende nur auf die Außenfläche des zugeordneten Keramiksegments (8) drückt.

12. Turbomaschine mit einem Dichtungsring nach einem der Ansprüche 10 und 11, dadurch gekennzeichnet, daß die Zungen wenigstens einer der beiden Reihen (5l1) jeweils einen mittleren Vorsprung (55) tragen, der in eine Mittelnut (8r) an der Außenseite des zugeordneten Keramiksegments (8) eingreift, derart daß der von den Keramiksegmenten (8) gebildete Ring in wenigstens einer Richtung gegen Drehung gesichert ist.

13. Turbomaschine mit einem Dichtungsring nach einem der Ansprüche 9 bis 12, dadurch gekennzeichnet, daß die einander benachbarten Längsränder der Keramiksegmente (8) im Bereich der Innenseiten dieser Segmente derart ausgebildet sind, daß ihre Längsränder (8t, 8s) einander schuppenartig überdecken.

14. Turbomaschine mit einem Dichtungsring nach einem der Ansprüche 9 bis 13, dadurch gekennzeichnet, daß die radiallen Flansche von Ventilationsöffnungen (56m, 56v) durchdrungen sind, durch die die Kammerumhüllung der Turbine mit den Teilen jedes der Keramiksegmente (8) in Verbindung steht, auf denen die beiden Reihen von Zungen (5l1, 5l2) aufsitzen.

15. Turbomaschinenanlage, deren Hochdruckrotoren jeweils von einem festen Ring nach einem der Ansprüche 1 bis 14 umgeben sind, dadurch gekennzeichnet, daß wenigstens eine erste Leitung (13A, 13B) in den inneren Hohlraum des jeder Hochdruckstufe der Turbine zugeordneten Metallrings (5A, 5B) Ventilationsluft führt, die unter einem ersten vorbestimmten Druck in der das Flammrohr oder die Flammrohre der Brennkammer der Turbomaschine und/oder in einer geeignet gewählten Stufe des Verdichters oder der Verdichter entnommen wird.

16. Anlage nach Anspruch 15, dadurch gekennzeichnet, daß die erste Leitung (13A, 13B) in einem ringförmigen perforierten Verteiler (15) mündet, der in dem inneren Hohlraum des zugeordneten Metallrings (5A, 5B) derart angeordnet ist, daß die Ventilationsluft auf die Innenfläche des Metallrings (5A, 5B) sowie auf seine Radialflächen auftrifft.

17. Anlage nach Anspruch 15, dadurch gekennzeichnet, daß der Ausgang der ersten Leitung zur Luftzuführung mit dem inneren Hohlraum des Metallrings (5A, 5B), insbesondere mit dem ringförmigen Kollektor (15) über wenigstens einen weichen balgenförmigen Stutzen (14A, 14B) verbunden ist.

18. Anlage nach einem der Ansprüche 15 bis 17, dadurch gekennzeichnet, daß der Luftdurchsatz in der ersten Leitung (13A, 13B) durch wenigstens einen Hahn (41) steuerbar ist, der in Abhängigkeit von einem Betriebsparameter der Turbine geregelt wird.

19. Anlage nach Anspruch 18 mit einem Rechner (40) mit voller Steuerungsautorität, dessen Eingänge mit einem Drehzahlaufnehmer zur Erfassung der Drehzahl (N2) der Turbine und einem Druckaufnehmer zur Erfassung des in der Brennkammer (35) herrschenden Drucks (Ps3) verbunden sind, dadurch gekennzeichnet, daß ein Ausgang des Rechners (40) mit dem Hahn (41) zur Steuerung des Luftdurchsatzes verbunden ist, derart daß dieser Hahn (41) in Abhängigkeit von dem von dem Rechner (40) auf der Grundlage der die Drehzahl (N2) und den Druck (Ps3) kennzeichnenden Informationen errechneten Signal die den verschiedenen Hochdruckstufen der Turbine zugeordneten ersten Leitungen (13A, 13B) entweder mit Kaltluft oder mit in verschiedenen Stufen des Verdichters oder der Verdichter entnommener Heißluft oder mit einem variablen Anteil jeder dieser Luftentnahmen in Verbindung setzen kann.

20. Anlage nach Anspruch 19, dadurch gekennzeichnet, daß die Kaltluft am Ausgang des Gebläses (33) und die Heißluft in einer Stufe der Hochdruckverdichters (34) in der Nähe seines Ausgangs entnommen wird und daß die Leitungen derart geführt sind, daß sie die aus den inneren Hohlräumen der verschiedenen Metallringe (5A, 5B) der Hochdruckturbine austretende Luft sammeln und zu einer einzigen radialen Leitung (32a) führen, die im Auslaßgehäuse der Turbine mündet.

21. Anlage nach einem der Ansprüche 15 bis 19, dadurch gekennzeichnet, daß die Kaltluft stromabwärts der dritten Leitstufe des Hochdruckverdichters (34) und die Heißluft in einer in der Nähe des Ausgangs liegenden Stufe des Hochdruckverdichters entnommen wird, und daß die aus den inneren Hohlräumen der verschiedenen Metallringe (5A, 5B) der Hochdruckturbine austretende Luft stromaufwärts der Niederdruckturbine evakuiert wird.

22. Anlage nach einem der Ansprüche 15 bis 21, dadurch gekennzeichnet, daß zweite Leitungen (44, 50), die die den verschiedenen Stufen der Hochdruckturbine zugeordneten Metallringe (5A, 5B) durchdringen, druckhaltende Luft unter einem zweiten vorbestimmten Druck, der vorzugsweise größer ist als der in der entsprechenden Stufe der Turbine herrschende Druck, gegen die Außenflächen der verschiedenen Keramiksegmente (8), insbesondere gegen an ihren Außenflächen angebrachte Ausnehmungen (8e) und gegen die Flächen richten, mit denen sich jedes Keramiksegment (8) auf die benachbarten Keramiksegmente und die stromaufwärtigen und stromabwärtigen radialen Halterungsorgane stützt.

23. Anlage nach Anspruch 22 mit einer zweistufigen Hochdruckturbine, dadurch gekennzeichnet, daß die der ersten Stufe der Hochdruckturbine zugeordneten zweiten Leitungen (44) mit Luft gespeist sind, die in einer Stufe des Hochdruckverdichters (34) entnommen wird, die in der Nähe seines Ausgangs liegt.

24. Anlage nach Anspruch 22, dadurch gekennzeichnet, daß der Zwischenraum(e) zwischen dem Metallring (5A) der ersten Turbinenstufe und den Keramiksegmenten (8) mit Luft gespeist wird, die außen an dem Flammrohr oder den Flammrohren der Brennkammer über einen Strömungskreis (52-53-49) entnommen wird.

25. Anlage nach Anspruch 23 oder 24, dadurch gekennzeichnet, daß die der zweiten Stufe der Hochdruckturbine zugeordneten zweiten Leitungen (50) mit einem Anteil der Ventilationsluft gespeist werden, die für die erste Stufe der der genannten Hochdruckturbine bestimmt ist.

FIG.: 3

FIG.:6

FIG.:4

FIG.:5

FIG.:7

0 119 881

FIG.:8

FIG.: 9

**0 119 881**

FIG.:10

FIG.:14

FIG.:11

FIG.:12

FIG.:13

7